Europäisches Patentamt

European Patent Office

Office européen des brevets

(11) Publication number: **0 276 530 B1**

(12) **EUROPEAN PATENT SPECIFICATION**

(45) Date of publication of patent specification: **11.11.92** (51) Int. Cl.⁵: **G01S 13/72**

(21) Application number: **87300756.1**

(22) Date of filing: **28.01.87**

(54) **Millimeter wave length guidance system.**

(43) Date of publication of application:
**03.08.88 Bulletin 88/31**

(45) Publication of the grant of the patent:
**11.11.92 Bulletin 92/46**

(84) Designated Contracting States:
**DE FR GB**

(56) References cited:
US-A- 3 728 724    US-A- 3 924 235
US-A- 4 115 776    US-A- 4 152 700
US-A- 4 179 696    US-A- 4 200 871
US-A- 4 224 507    US-A- 4 488 249

(73) Proprietor: **UNISYS CORPORATION**
**Township Line and Union Meeting Roads**
**Blue Bell Pennsylvania 19424(US)**

(72) Inventor: **Garrard, John Taylor**
**3611 Dartmouth Avenue**
**St. Petersburg Florida 33713(US)**
Inventor: **Gregg, Jack Edward**
**1100 South Belcher Road Number 366**
**Largo Florida 33541(US)**
Inventor: **Roeder, Robert Sevier**
**1242 Nelson Street**
**Dunedin Florida 33528(US)**

(74) Representative: **Singleton, Jeffrey et al**
**Eric Potter & Clarkson St. Mary's Court St.**
**Mary's Gate**
**Nottingham NG1 1LE(GB)**

EP 0 276 530 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to stabilised target seeking devices and more particularly concerns active continuous-wave frequency-modulated millimeter wave radar concepts using multiple range bins for target detection and tracking.

Various prior passive and radiometric millimeter wavelength grou86302563 nd target detection and tracking systems have demonstrated highly accurate passive target tracking. However, these passive guidance systems tend to have relatively short range and, especially at the higher microwave frequencies, are further degraded by adverse atmospheric conditions. Accordingly, recent ground target seekers have relied more heavily upon the use of both active radar and passive radiometric modes to achieve beneficial combinations of target acquisition range and tracking accuracy. Operation in the active mode desirably affords the needed target acquisition and tracking range characteristics, while the relatively short range passive operation increases final tracking accuracy, overcoming the effects of target glint and scintillation at relatively short ranges.

Operation of active tracker systems in the 30 to 300 GHz frequency range results in a more desirable combination of antenna aperture size and weather penetration capability than does operation in higher or lower regions of the spectrum. In addition, significantly wider radio frequency band width is available for clutter smoothing and precipitation backscatter decorrelation than in the lower radar carrier frequencies. Typically selected millimeter wave operational frequencies are at 35 GHz and 95 GHz, where partial atmospheric windows are found; that is, where attenuation is much lower than in other parts of the millimeter wave spectrum. Since the primary use of the seeker is to detect and to track ground targets, its antenna receives a considerable amount of energy from the terrain in addition to that it receives from the target. In the active case, it is the reflected illuminating energy. In the passive case, it is primarily terrain-emitted energy. In passive operation, the more reflective, and therefore less emissive, metallic targets tend to reflect the cold outer space temperatures and thus appear cold as contrasted with the warmer background. In the active mode, metallic targets appear as a higher source of reflected energy than a terrain area of equal physical size. In both cases, the seeker may logically be considered to be a contrast seeker. It is highly desirable to keep the antenna beam intercept on the terrain as small as possible. Since the seeker will normally be employed in relatively small diameter airframes or vehicles, it is desirable to employ carrier frequencies as high as possible, but they must be commensurate with the required atmospheric penetration capability.

Both pulse and frequency modulated carrier wave active mode waveforms have been employed in millimeter wave contrast seekers. These have employed relatively low power, solid state transmitter devices, taking into account cost of small terminally guided vehicles and volume and power constraints. Impatt diode oscillators are employed primarily in transmitter devices employing pulse modulated waveforms. The seeker of the present invention may employ a frequency modulated waveform and a Gunn diode oscillator transmitter and represents a significant advance over the system disclosed in U.S.-A-3,921,169. The present invention is also generally related to that disclosed in U.S.-A-4,200,871.

Another important function of ground target contrast seekers is signal processing to discriminate against the active mode terrain reflected clutter energy which competes with the substantially point target reflected energy. Both pulse and frequency modulation continuous wave systems can employ range resolution to reduce the active mode clutter return by effectively reducing the illuminated terrain area which would otherwise result at the antenna beam intercept. Pulse systems employ narrow pulses and time gating to achieve range resolution. These systems in general must employ wide receiver intermediate frequency band widths in order to receive the narrow pulse. Band width of at least $l/\tau$ is required, where $\tau$ is the pulse duration in seconds. Systems employing incoherent frequency modulation wave forms can transmit energy over wide bands for effecting terrain and precipitation clutter decorrelation and still employ narrow receiver intermediate frequency band widths. This is an advantage in maximising the signal-to-total noise ratio ($S/N_t$) The active mode target detection range of millimeter wave contrast seekers is usually limited by the target signal-to-background noise ($S/N_B$); i.e. by the terrain reflected energy, thus indicating the desirability of minimising antenna beam width. However, in certain environmental conditions, i.e. low terrain reflectivity and adverse atmospheric conditions, $S/N_r$ can become a range performance limiting factor. The quantity $S/N_r$ is defined as the signal-to-receiver noise ratio. This is particularly true if a relatively long detection range is desired in a system operating at the higher millimeter wave frequencies, where higher atmospheric attenuation occurs. Thus, maximising $S/N_r$ can be an important design factor. Range resolution in frequency modulation systems, employed for minimising terrain and precipitation noise and for range to target/terrain measurement, is accomplished with frequency gating rather than time gating. Millimeter wave contrast seekers employing both horizontal trajectories and near vertical trajectories during target search

2

have been demonstrated. Horizontal trajectory systems can better utilise range resolution to reduce background clutter during target search because of the antenna beam depression angle $\Psi$ generally employed (of the order of 25 to 30 degrees from horizontal). The range resolution (range bin) intercept length on the terrain is increased over the actual range resolution by a factor of

$$\frac{1}{\cos \Psi} \; .$$

It will be noted that, for a completely vertical system where $\Psi = 90°$, the terrain clutter reduction that can be realised from range resolution is zero. Other typical differences between millimeter wave contrast seekers for horizontal and near vertical target search mode trajectories include the search pattern employed and the related target detection signal processing implementation.

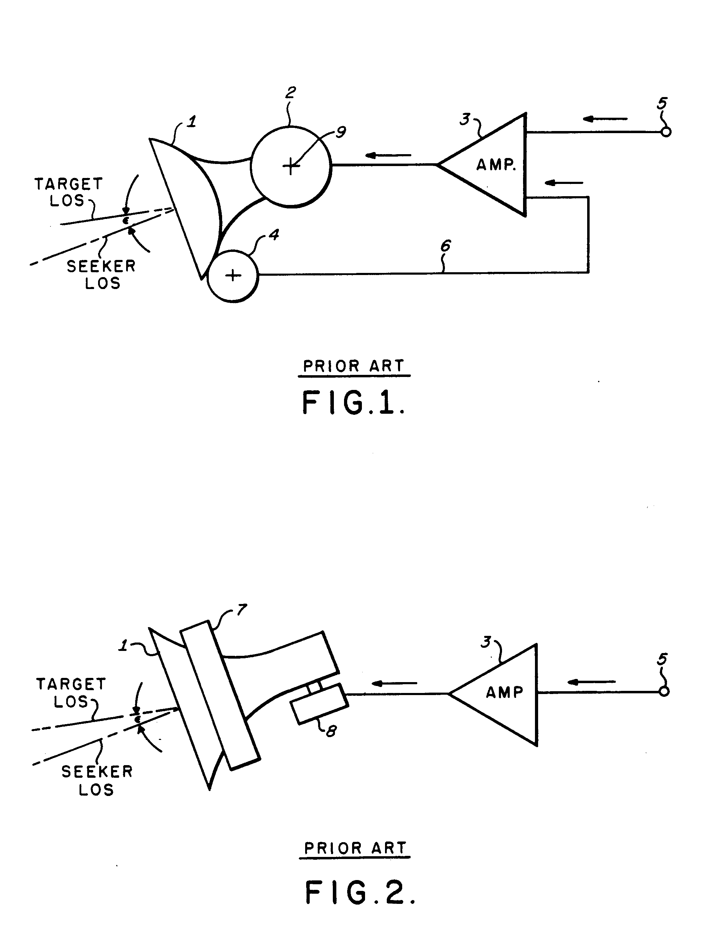

Stabilisation of the seeker system is the means by which the seeker line of sight (LOS) is decoupled from, and made independent of, vehicle body rotation. Two methods of the prior art will be briefly described. There generally are two control axes, but only elevation is shown in the Figures 1 and 2. In the prior art system of Figure 1, there are two rate gyroscopes disposed on an antenna 1 on mutually orthogonal axes, one for elevation motion sensing and the other for azimuth motion sensing. Any vehicle motion-induced disturbance torque, such as from bearing friction, will tend to rotate the antenna 1. The rate gyroscopes immediately sense this and send an opposing signal to amplifiers and thus to the torque motors which offset the disturbance torques and hold the antenna rate very nearly to zero. There is an additional amplifier input from the millimeter wave sensor which commands the antenna 1 to track the target. When the tracking error $\epsilon$ is zero, the rate command is zero. In Figure 1, and more particularly with respect to the elevation control channel, any motion-induced torque tends to rotate the antenna 1 about the elevation axis 9. The elevation rate gyroscope 4 senses the rotation and supplies an opposing signal to a servo amplifier 3 via a lead 6 and thus to the elevation torque motor 2, which thereby holds the antenna rate substantially at zero. The input from terminal 5 from the millimeter wave sensor commands the antenna 1 to track the target. The azimuth axis error correction is similar.

In the prior art two-degree-of-freedom gyroscopically stabilised system of Figure 2, a spinning mass 7 is used directly to stabilise the antenna 1. Any disturbance torques are automatically resisted by the spin momentum of the spinning mass 7. Slight precession errors are detected by the millimeter wave sensor and cross-axis torques are automatically applied. For example, if an elevation error is apparent, an azimuth torquer 8 is energised through the servo amplifier 3 to precess the antenna 1 about its elevation error to zero. Azimuth error correction is similarly accomplished.

US-A-3,728,724 discloses an adaptive swept-frequency active radar system which overcomes the disadvantages of pulsed systems by providing a active radar which employs continuous wave signals rather than pulse signals.

US-A-3,924,235 discloses a digital antenna positioning system for the antenna of a radar tracking system without employing rate gyroscopes. A digital target line-of-sight error signal representing the error between the radar beam line-of-sight and the target line-of-sight in a light-of-sight coordinate system is generated and then referenced to a fixed coordinate system. In a radar system employing an antenna having an axis system corresponding to the beam line-of-sight axis system, the line-of-sight error signal is referenced to a fixed coordinate system by first referencing the error signal to an aircraft axis system and then to the fixed coordinate system to obtain a fixed coordinate referenced error signal. The fixed coordinate referenced line-of-sight error signal may then be employed to generate fixed coordinate referenced line-of-sight error rate and position signals through the use of a predetermined transfer function and an integrator having a predetermined, fixed coordinate system referenced constant of intergration. The line-of-sight position signals referenced to the fixed coordinate system may then be used to generate antenna angular pointing error signals which may be used to drive the antenna in a direction tending to null the line-of-sight error signal.

The present invention is defined in the appended claims and provides an active frequency modulation continuous wave target seeker system with vehicle body-fixed rate sensor stabilisation. The seeker system functions in the active frequency modulation continuous wave radar mode using multiple range bins for target detection and tracking. The seeker system provides line-of-sight rate steering signals to the vehicle airframe to effect proportional navigation. In a preferred configuration the invention includes a microwave transmitter producing a swept frequency modulated carrier wave and also providing local oscillator signals. a transmitter feed and four surrounding receiver feeds cooperate with an antenna employing polarising elements. After signal mixing, the gain controlled received signals are processed by a surface acoustic

EP 0 276 530 B1

wave filter producing narrow frequency channels serving as range bins. A multiplexer scanning the multi-channel filter output controls a target acquisition detector which initiates target angle tracking. It also controls a differential amplifier for terrain or background plus target range tracking. A range search generator is provided for repetitively moving a range bin or gate from greater to less than the range from seeker to terrain until range lock-on is instituted by a range lock-on threshold stabiliser.

The stabilisation system is constructed about a dual axis servo system driving a set of cooperating gimbals supporting the polarisation twist plate antenna aperture. Elevation and azimuth tachometer rate sensors and position sensors, both driven directly by gimbal servo torque motors are provided, along with a pair of body-mounted dual axis rate sensors providing vehicle body pitch, yaw and roll rates. Also included in the system is a gimbal servo angle search command generator for acquisition of the target. Azimuth and elevation angle track demodulators determine line of sight to the target, error, and command line of sight rates of the gimbals during target tracking and output line of sight proportional signals to the vehicle automatic pilot.

The invention will now be described in greater detail, by way of example, with reference to the accompanying drawings, in which:-

Figures 1 and 2 are elevational views of typical prior art target seeker antenna stabilisation systems,

Figure 3 is a diagram of a millimeter target sensor system, showing its electrical components and their interconnections, according to the present invention,

Figure 4 is an elevational view, partly in cross-section, of an antenna and stabilisation system in accordance with the present invention,

Figure 5 is a detailed diagram, showing components and their electrical connections, of the stabilisation system of Figure 4,

Figures 6 and 7 are respective elevational and azimuthal views, partly in cross-sections, of features of the antenna mount of Figure 4,

Figures 8 and 9 illustrate details of the antenna feed,

Figure 10 is a diagram of angle track demodulators showing their electrical components and their interconnections,

Figure 11 is a logic table useful in explaining the operation of the invention,

Figure 12 illustrates signal waveforms useful in explainng the operation of the apparatus of Figure 10, and

Figure 13 is a block diagram of the r.f. and i.f. receiver sections of the seeker of the present invention.

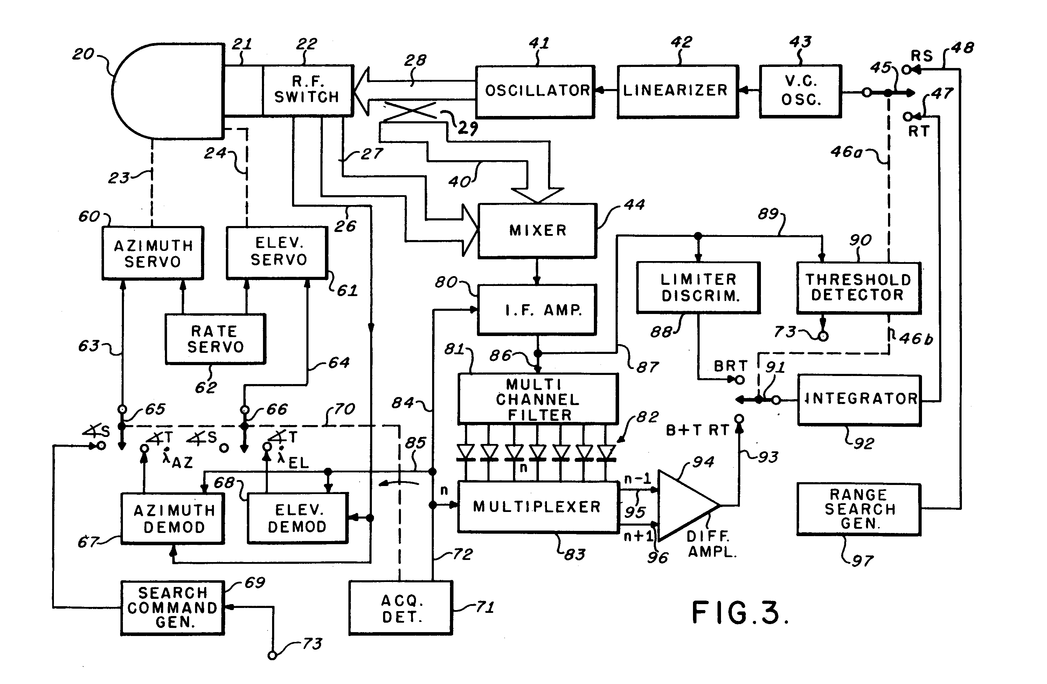

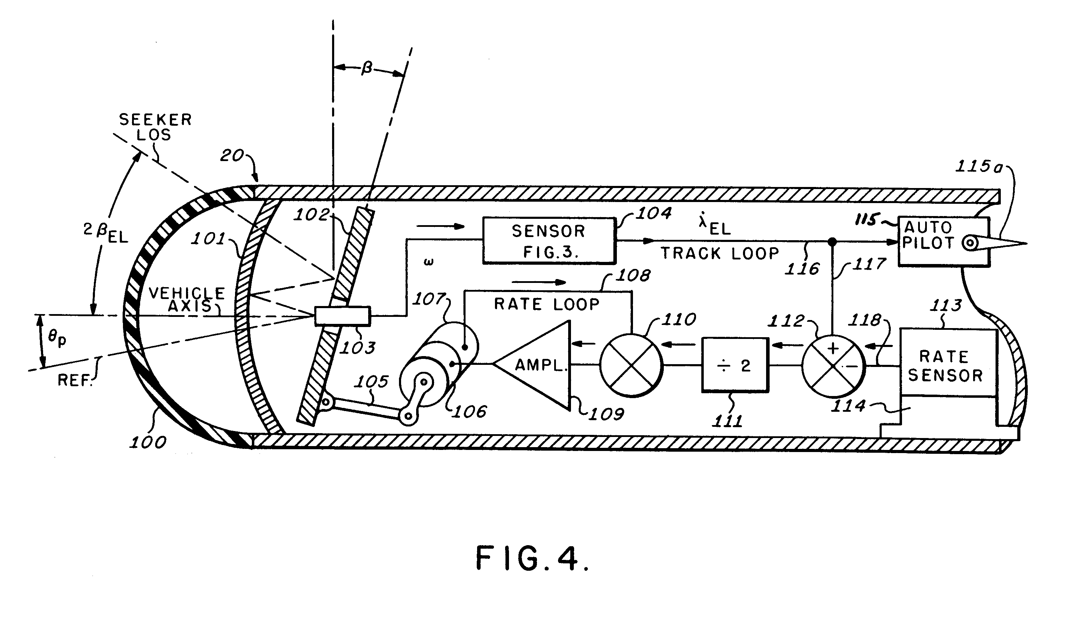

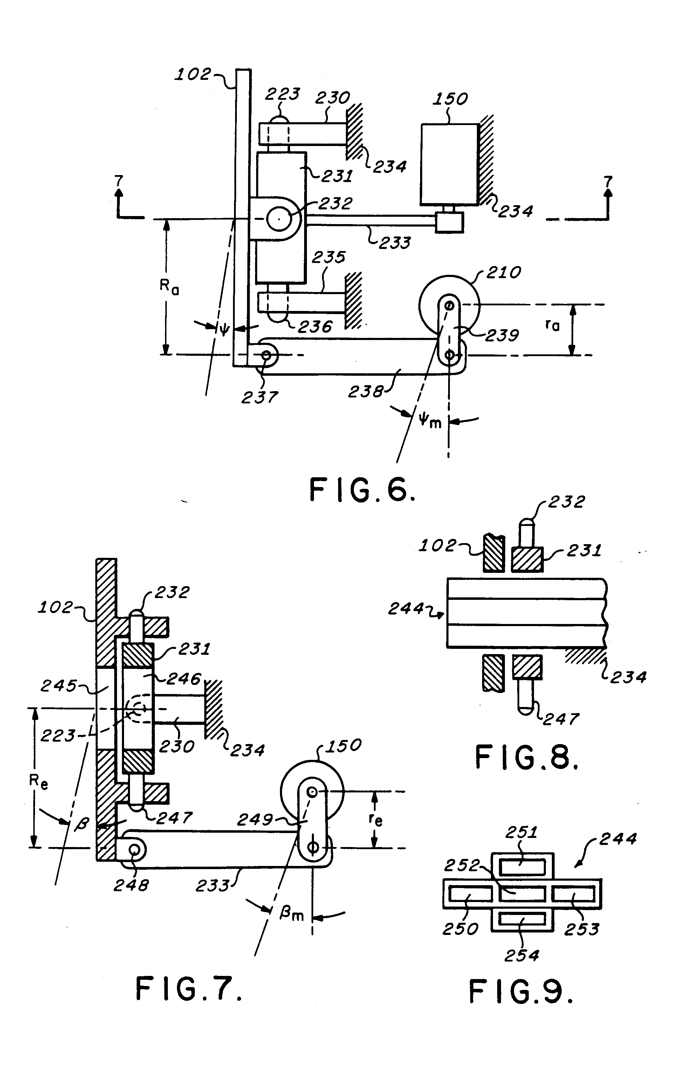

Referring to Figure 3, which represents the millimeter wavelength target sensor portion of the present invention, millimeter wavelength transmitter and local oscillator signals are generated by a microwave oscillator 41, which may be a conventional Gunn diode oscillator, for example. The output of the oscillator 41 is coupled through a waveguide 28 to a conventional, centrally located feed 21 for an antenna 20 (see also the feed system 252 of Figure 9). The antenna 20 may take any of several conventional forms, including a preferred form yet to be discussed but it includes a matrix 244 (Figure 9) of receiver feeds which may be made receptive in conventional cyclic or monopulse receiver fashions. Any received echo signals are coupled by an r.f. switch 22 via a waveguide 27 to a conventional wide band microwave mixer 44, along with a cooperating local oscillator signal coupled from the oscillator 41 through a directional coupler 29 and a waveguide 40. It is to be observed that the oscillator 41 and, consequently, the transmitted and local oscillator outputs are continuous wave, frequency modulated signals. A linear sweep signal for the oscillator 41 may be supplied by a voltage controlled oscillator 43 and a conventional linearising circuit 42, if required. The oscillator 43 is controlled by incoming signals selected by a switch 45 from those appearing on leads 47 and 48, as will be explained.

It will be understood by those skilled in the art that the invention as described herein may be utilised over a broad range of frequencies. Operation from 30 GHz to 100 GHz in the millimeter wavelength frequency range is, however, particularly beneficial.

The mixer 44 feeds a relatively narrow band intermediate frequency amplifier supplied with a gain control signal, as will be explained, via a lead 84 from a multiplexer 83. The output of an i.f. amplifier 80 takes respective branching paths 86, 87, and 89 to a multi-channel filter 81, to a limiter-discriminator 88, and to a threshold detector 90, as will be explained.

The multi-channel filter 81 receives an i.f. output on a lead 86 and may consist of n conventional parallel surface acoustic wave filters for passing side-by-side, contiguous, narrow frequency bands of signals representing a plurality of narrow frequency bands or range bins. The n outputs of filter 81 respectively pass through members of an array 82 of a corresponding plurality of diodes, poled as in the drawing, to n inputs of the multiplexer 83, which latter provides means for scanning the plural outputs. The multi-channel narrow band filter 81 produces narrow range bins such that high range resolution, typically 0.5 percent to 2 percent of slant range, is achieved. This is employed to reduce the terrain clutter which competes with the target signal. The antenna beam terrain intercept may, for example, be divided into 16 areas, narrow in the range direction, by the use of 16 range bins.

The multiplexer 83 provides particular, respective branching outputs on leads 84, 85 and 72. The output on lead 84 is the aforementioned gain control signal for use by the i.f. amplifer 80, while the error signal components on the lead 85 are supplied to first inputs of azimuth and elevation sevo demodulators 67 and 68. The lead 72 suplies the same output to a target acquisition detector 71, which latter initiates automatic target angle tracking through the operation of a link 70 and consequent motion of the switches 65 and 66 to the right as seen in Figure 3 of the drawings. For supplying an angle tracking phase reference signal within the demodulators 67, 68 conventional quadrature reference signals are available within an r.f. switch 22 because of a self-contained reference generator therein; the reference signals are passed via a lead 26 to the demodulators 67, 68 wherein they are employed along with signals on the lead 85 to generate azimuth and elevation error signals for respective supply, via lead 63, 64, to the azimuth and elevation servos 60 and 61. Rate sensors yet to be discussed and indicated by the single package 62 supply stabilising signals to the servos 60, 61. When a target is acquired, the line of sight of antenna 20 is controlled in azimuth and elevation by the servomotors 60 and 61 and the respective linkages 23 and 24, as will be further discussed. When no acquisition detecion signal is present at detector 71, the switches 65, 66 move to the left as seen in Figure 3 so that there is no input to the elevation servo 61. On the other hand, the switch 65 couples the input of the azimuth servo 60 to a search command generator 69 for azimuth search scanning purposes.

As previously noted, a branching output of the i.f. amplifier 80 on lead 87 is supplied via the lead 87 to limiter-discriminator 88 and via a lead 89 to a threshold detector 90. Lack of a signal detected by the threshold detector 90 provides no output at terminal 73 of the detector 90 and thus supplies none at the same terminal 73 as an input to the search command generator 69. In this circumstance, the search command generator 69 does not produce a triangular wave output on lead 63 since the azimuth scan is not desired until terrain range lock-on occurs.

The threshold detector 90 serves as a range lock-on detector and also controls an internal actuator for moving links 46a, 46b up or down in Figure 3. In this manner, either the output on the lead 48 of a range search generator 97 or of an integrator 92 on lead 47 may be supplied to the respective RS or RT terminals of the relay switch 45. The range search generator 97 produces a sawtooth wave for repetitively moving a range bin or gate from greater to less than the range from seeker to terrain until range lock-on occurs.

The range search function employs the full active i.f. bandwidth output (effectively a wide bin) for initially locking on to terrain, thus utilising much more terrain reflected energy than would be available from one of the narrow range bin filters of the multichannel filter. It will be recognised that in a swept frequency modulation continous wave actie radar system, range to terrain or terrain plus target must be measured in order to keep the active i.f. centre (beat) frequency essentially constant and centred within the i.f. band. Detection can occur in any of the range bins (e.g. bin n in Figure 3). The multiplexer 83 scans the range bin filters 81 and the acquisition detector 71 selects the bin with the target. This detector 71 can be a simple threshold level detector or it may be a target signal detector similar to that described in Figure 3 of the U.S.-A-4,150,379. In like manner, the selected (n-1) and (n+1) signals from the multiplexer 83 may be supplied via leads 95, 96 to an amplifier 94 to provide a differential output over lead 93 to one terminal of a relay switch 91. Range tracking after target detection is accomplished by comparing energy in alternate (n-1) and (n+1) range bins, e.g. bins 3 and 5 if the target is in bin 4. The proper bins for range tracking, i.e. on each side of the target bin, are automatically selected by the multiplexer 83 at the time of target detection. According to the position of the link 46b, the output of the differential amplifier 94 may be coupled to the integrator 92 or, alternatively, the output of the limiter-discriminator 88 may be coupled to the integrator 92.

Referring now to Figure 4, the operation of the antenna 20 of Figure 3 will be described in a discussion limited to the elevation axis of the system. It will be apparent that the actual system employs scanning and stabilisation about two mutually perpendicular axes. The dual mode rapid scan, rapid track antenna is beneficially a very low inertia device, eliminating excessive antenna driving forces. In Figure 4, the feed system 103 is centred generally at the axis of the vehicle, and is arranged to illuminate a fixed, symmetrically disposed parabolic reflector 101. The reflector 101 is a conventional polarisation-sensitive, shaped sheet and reflects or transmits energy incident upon it depending upon the plane of polarisation of the incident millimeter energy. The primary feed horn 252 (Figure 9) of antenna feed 103 (or 244) is polarised so the parabolic reflector 101 reflects and focusses the spherical wave incident upon it into a flat phase front. The collimated transmitter beam thus formed is directed against the scanning mirror 102. It is adapted in a conventional manner to rotate the plane of polarisation of the flat phase front through 90 degrees and reflects the electromagnetic beam back towards the parabolic reflector in a new direction determined by the angular position of the mirror 102. Because the reflected radiation pattern is polarised orthogonally to the polarisation of the initial feed horn 252, it passes with little loss directly through that polarisation discriminating parabolic focussing reflector 101. The reflector 101 may serve as a radome for the apparatus, or a separate radome 100 may be used.

Details of the microwave structure used in constructing the antenna reflector 101, 102 do not necessarily form a novel part of the present invention, since there is a variety of readily available approaches to the problem. Leon Schwartzman and Robert W. Martin describe one useful arrangement in the technical paper: "A Rapid wide-Angle Scanning Antenna with Minimum Beam Distortion", published in the Proceedings of the Fifth Annual East Coast Conference on Aeronautical and Navigational Electronics, October 1958.

Martin and Schwartzman employed a parabolic focussing member 101 consisting of an aluminium honeycomb sandwich structure to which a flat metal strip grating was bonded. The grid size and spacing and the sandwich dimensions were balanced to ensure reflection for one polarisation and high transmission for the orthogonal polarisation.

In the present invention, the parabolic focussing reflector 101 comprises the above-described flat metal strip grating bonded to a cross-linked styrene copolymer substrate commonly used as a microwave dielectric material such as that manufactured under the trade name "Rexolite" and distributed by the Oak Materials Group, Inc., Franklin, New Hampshire 03235, United States of America. The scanning mirror 102 has a two-fold function: first, it introduces a linear phase shift upon the flat phase front. The consequential pattern is therefore the secondary pattern of a constant-phase aperture field rotated through an angle equal to twice the angular displacement of scanning mirror 102. Secondly, the scanning mirror 102 rotates the polarisation of the energy incident upon it through 90 degrees. The scanning mirror 102 employs a grating member identical to that present in paraboloid reflector 101, which may be a layer of low dielectric such as isocyanate foam above a metallic ground plane, having an orientation of the longitudinal dimension of 45 degrees with respect to the incident polarisation. In the present invention a glass microfibre reinforced PTF material commonly used for strip line and microstrip circuit applications such as that manufactured under the name "Duroid" and distributed by the Rogers Corporation, Micromet Division, Box 700, Chandler, Arizona 85224, United States of America, may be used in lieu of isocyanate foam.

It will be appreciated by those skilled in the art that the antenna 20 is a desirable low inertia, low power consuming, compact device allowing maximum aperture and minimising the antenna beam intercept at the terrain level. The illuminated background clutter in the active mode is minimised, as well as the background radiated power at the receiver input in the passive mode. Since the antenna pattern is steered by an angle twice the angular motion of the twist plate mirror 102, the total field of view of antenna 20 in both planes is maximised. Since the antenna feeds 244 are fixed, a conical scan motor is eliminated, as well as complex rotating microwave joints.

As further seen in the simplified single axis system of Figure 4, and in the tracking mode, the receiver horns 251 and 254 as shown in Figure 9 supply elevation error data $\omega$ for sensor procesing by the target sensor system 104 shown in detail in Figure 3, thus generating line of sight rate data on a lead 116 for use by the elevation axis of the vehicle flight control system or automatic pilot 115 for operation of an elevation control surface 115a. This signal is also coupled via a lead 117 to one input of a summation device 112, poled as shown. Body rate signals generated by a body rate device 113 are affixed by a mounting 114 to the body of the vehicle and are coupled to a second input of the summation device 112. The tracking loop is completed through the summation device 112, an analogue amplitude divide-by-two circut 111, a second summation device 110, a servo amplifier 109, and a torque motor 106 for driving a link 105 and moving the scanner reflector 102 about its elevation axis. A rate stabilising loop is provided in a path from the tachometer 107 driven by the torque motor 106 through a lead 108, the second summation device 110, amplifier 109, and torque motor 106. It will be understood that an operative system will contain an azimuth control system analogous to the elevation control of Figure 4 for operating a flight control surface about its azimuth axis.

In a typical application of the terminal guidance seeker system, the seeker autopilot controls the flight of the vehicle in a horizontal trajectory during the target search in azimuth with the antenna depressed below the horizon by an angle of about 25 to 30 degrees. Prior to arriving at the target area, the seeker is activated and range search is initiated employing the wide bin full active i.f. bandwidth. Terrain lock-on occurs within the first one to three range search periods and range track is initiated; i.e. the range track switch 45 is switched from search to track. With the range search-track switch 45 in its track position, the input of the voltage controlled oscillator 43 and the sweep repetition frequency of the f.m. oscillator 41 is controlled from the wide bin range track output, thus keeping the beat frequency centred in the active i.f. band. Following range track initiation, target angle search is initiated either automatically or by a timer signal. Target search is conducted by varying the antenna azimuth position back and forth at a fixed rate to accomplish a cyclic azimuth scan, covering swaths of the terrain. Search area coverage in the range direction results from the forward motion of the vehicle. Preset horizontal search width may be varied from a very few degrees, e.g. ± 3 degrees, to the full azimuth gimbal limit capability, e.g. ± 20 degrees, as desired, and dependent on the limit imposed by the forward velocity of the vehicle.

A point target, detected in one of the narrow range bin channels by the acquisition detector 71 will transfer the seeker from angle search to track. The outputs of the angle track demodulator 67, 68 then control the motion of the azimuth and elevation antenna aperture gimbals to accomplish target angle track. At the time of target angle track initiation, signals proportional to seeker-to-target elevation and azimuth line of sight rate are fed to the automatic pilot 115 for proportional navigation guidance. This type of navigation employs vehicle heading rate of change proportional to the vehicle-to-target rotational rate and thus requires line of sight rate information from the seeker. Employing antenna beam sequential lobing (or monopulse), the angle track demodulators 67, 68 measure the position of the antenna lobe pattern centre with respect to target position and derive elevation and azimuth error. The error signals are employed to drive the antenna gimbals at rates proportional to the errors and thus are, in effect, line of sight rate signals. The same rate signals with conditioning are fed to the vehicle automatic pilot.

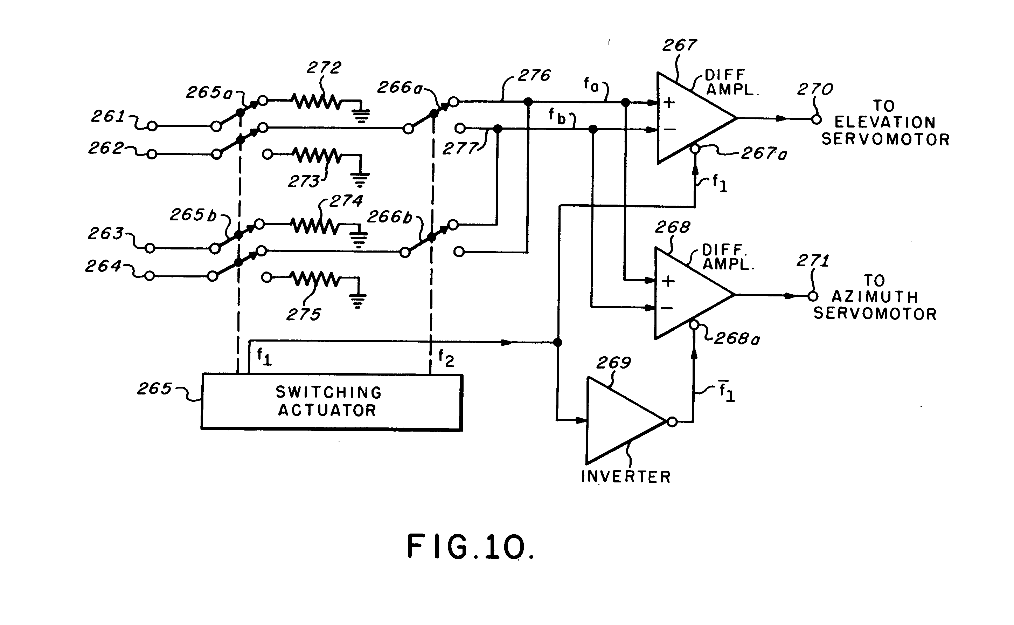

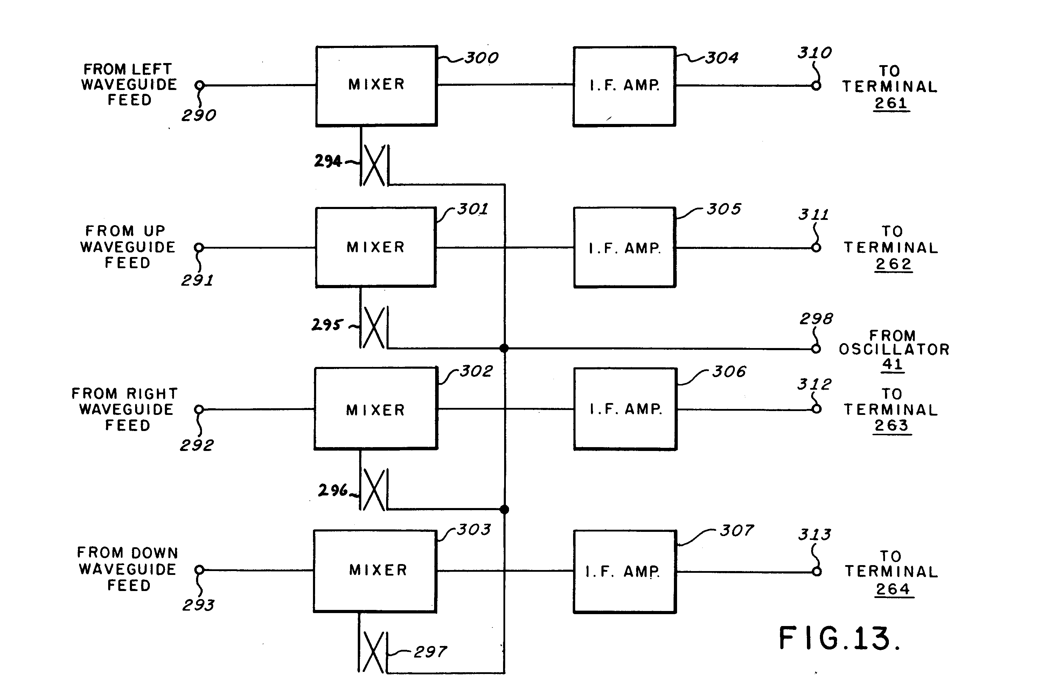

Left (L) 250, Up (U) 251, Right (R) 253 and Down (D) 254 waveguide feeds (Figure 9) may be sampled in Left-Right and Up-Down pairs by the i.f. switch of Figure 10 via the i.f. circuitry of Figure 13. Input terminals 261, 262, 263 and 264 are coupled to terminals 312, 311, 310 and 313, respectively, and are further coupled to input terminals of switches 265a and 265b, the middle output terminals of which are in turn coupled to input terminals of switches 266a and 266b, the remaining output terminals being coupled to resistors 272, 273, 274 and 275. The output terminals of switches 266a and 266b are coupled to input terminals of differential amplifiers 267 and 268 poled as shown in Figure 10. A switching actuator 265 actuates the switches 265a, 265b, 266a and 266b and further supplies a switching signal $f_1$ to the gating terminal inputs 267a, and 268b of gated differential amplifiers 267 and 268, respectively. The output terminals 270 and 271 of differential amplifiers 267 and 268 are coupled to the elevation servomoter 60 and azimuth servomoter 61, respectively.

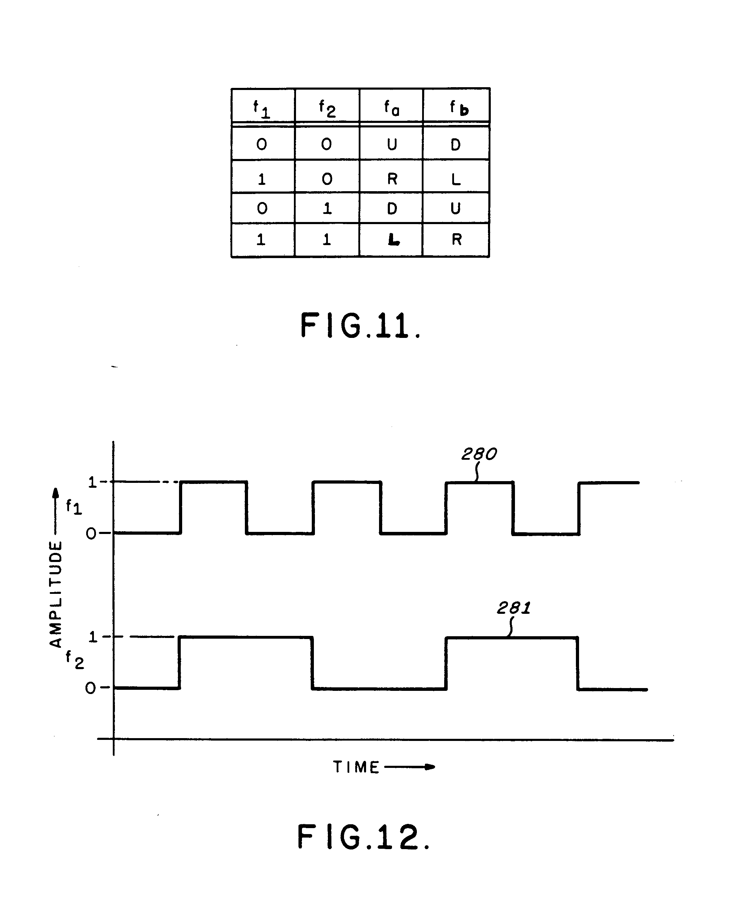

In operation, the switching actuator 265, which may utilise logic gates and microprocessor control to genrrate switching signals $f_1$ and $f_2$ shown in Figure 12 as waveforms 280 and 281, respectively, is arranged to actuate the switches 265a, 265b, 266a and 266b in accordance with signals $f_1$ and $f_2$ The frequency of signal $f_1$ is twice that of $f_2$ and phased as shown in Figure 12. Referring again to Figure 10, the switches 265a, 265b, 266a and 266b will be positioned to contact the upper terminals, when signals $f_1$ and $f_2$ have a value of zero, and will be in the lower position when $f_1$ and $f_2$ have a value of one. Thus, the switch output signals $f_a$ and $f_b$ are governed by the logic table of Figure 11, such that the output signals $f_a$ and $f_b$ appear on leads 276 and 277, and comprise signals corresponding to Up-Down and Right-Left signal pairs. The signal pairs are coupled to the gated differential amplifiers 267 and 268 which supply a signal at their output terminals equal to the difference between $f_a$ and $f_b$, ie $f_a - f_b$. The differential amplifiers 267 and 268 are turned on and off by the gating signal $f_1$, so that Up-Down difference signals are supplied at the output terminal 270, and Right-Left difference signals are supplied at the output terminal 271. An inverter 269 inverts the signal $f_1$ and thus the differential amplifiers 267 and 268 are alternately gated on and off.

The Up-Down difference signals present at the output terminal 270 are amplified in intermediate frequency amplifiers, then processed by elevation angle track demodulator circuits, and then coupled to the elevation servomoter 61. The Right-Left difference signals available at the output terminal 271 are amplified in intermediate frequency amplifiers, then processed by azimuth angle track demodulator circuits, and then coupled to the azimuth servomoter 60.

Alternatively, the Up-Down, Right-Left antenna output signals may be sampled at the antenna feeds rather than i.f. frequencies; such a configuration is shown in Figure 13. Input terminals 290, 291, 292 and 293 are coupled to waveguide feeds 250, 251, 253, and 254 and further coupled to mixers 300, 301, 302 and 303, respectively. The r.f. oscillator signal from the oscillator 41 is coupled via an input terminal 298 and directional couplers 294, 295, 296 and 297, respectively. I.F. amplifiers 304, 305, 306 and 307 are coupled at their input terminals to receive the output signals of the mixers 300, 301, 302 and 303, respectively, and to provide i.f. signals to output terminals 310, 311, 312 and 313, respectively, which may be coupled to input terminals 261, 262, 263 and 264, respectively.

In operation, individual r.f. signals received from the waveguide feeds 250, 251, 253, and 254 beat against signals received from the oscillator 41, in the corresponding mixers 300, 301, 302 and 303, the beat frequency signal $f_b$ being amplified in the i.f. amplifiers 304, 305, 306 and 307, respectively, thus forming a four-channel receiver. The i.f. signals from the four-channel receiver are coupled to the input terminals 261, 262, 263, and 264 to enable sampling of intermediate frequency signals corresponding to the radio frequency signals. The demodulator of Figure 10 provides error correction signals to the azimuth and elevation servomotors 60, 61. At the time of target detection, the range track switch 45 is automatically switched to back-ground plus target position data and more accurate narrow bin, e.g. (n-1), (n + 1) comparison range tracking commences. Following angle track initiation, target track and vehicle terminal guidance continue, resulting in a direct hit on the target. If the seeker implementation includes a passive or radiometric mode and environmental conditions are favourable, the seeker may be automatically switched to its passive mode at a relatively short range, e.g. 300 m., for improved terminal accuracy and for a hit very close to the target physical centroid.

Referring again to Figure 4, the basic method of stabilising the seeker line of sight is shown. In the system, the antenna 102 uses the torque servomotor 106 and rate sensor 107 acting together, the rate sensor 107 being a tachometer which senses antenna rate relative to the vehicle body. Also to cancel vehicle motion disturbances at the antenna 102, the body fixed rate sensor 113 measures this motion and drives the antenna 20 or 102 in the opposite direction to keep it pointing in a fixed direction. The rate command from the millimeter wave sensor 104 drives the antenna 20 or 102 to track the target. As noted in Figure 4, the twist reflector antenna 102 acts like a mirror and thus, the seeker line of sight does not correspond to the reflector plate centre line. The plate angle in space is exactly one-half the seeker angle line of sight in space. The plate rate $\dot{\beta}$ is controlled such that $\dot{\beta} = 1/2\ \dot{\theta}_p$ where where $\dot{\theta}_p$ is the vehicle pitch rate.

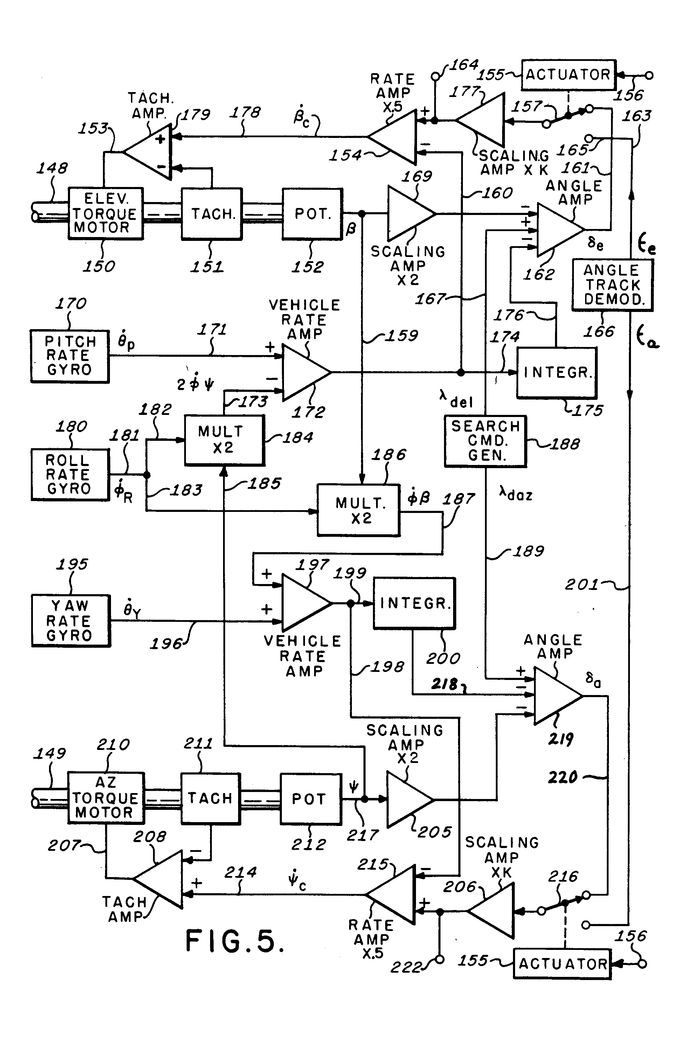

Because of the significance of the unique antenna control, stabilisation and body motion decoupling sub-system in the seeker, features of this sub-system will be discussed in further detail with respect to Figures 4, 5, 6 and 7. As noted earlier, the twist reflector 102 has significant advantages from packaging and drive power standpoints. Because only a thin plate is moved to direct the seeker line of sight and because the reflector plate has a two-to-one gain, it is easy to obtain usable seeker line of sight angles of ± 20° or more with an aperture diameter that is 90 per cent or more of the vehicle diameter. The low moment of inertia of the plate 102 minimises electrical power required to accelerate line of sight. This low power minimises the radio frequency interference and torque servomotor heating problems commonly experienced with other torque motor drives. Because the twist reflector performs like a mirror with a gain of two, the seeker line of sight is inherently coupled to vehicle motion. This coupling is removed with the control implementation shown in Figure 5. Tracking stabilisation and search stabilisation will be described.

As noted in Figures 6 and 7, the reflector 102 includes a central aperture 245 accommodating a waveguide feed system 244 shown in Figures 8 and 9 and is journalled for horizontal motion in journals 232 and 247 diametrically fixed upon a inner gimbal 231. The gimbal 231 is, in turn, provided with opposed journals 223, 236 for vertical motion of apertured (246) gimbal 231 and therefore plate 102. The journals 223, 236 are supported in yokes 230, 235 affixed to the vehicle body 234. A vehicle body-fixed azimuth torque servomotor 210 drives pick-off accessories attached thereto and also drives a linkage 239, 238, 237 for positioning the reflector plate 102 in azimuth. Similarly, the reflector plate 102 is positioned in elevation by a torque motor 150 and linkage 249, 233, 248. The describd motions occur with respect to the body-fixed antenna feed system 244.

Turning now to Figure 5, it will be seen that the rotor of the elevation torque servomotor 150 is coupled by the same shaft 148 to operate a tachometer 151 and an elevation position pick-off potentiometer 152. Likewise, the rotor of the azimuth servo torque motor 210 is coupled by the same shaft 149 to a tachometer 211 and to an azimuth position pick-off potentiometer 212. Body-fixed pitch, roll, and yaw rate gyroscope 170, 180, 195 supply further stabilisation signals.

The rate summing amplifier 154 supplies its output via lead 178 to a tachometer summing amp 179. The input terminals of a rate summing amplifier 154, poled as shown in Figure 5, include a signal on a lead 160 coming indirectly from a pitch rate gyroscope 170 coupled via a lead 171 to one input of a body rate summing amplifier 172, poled as shown, and a signal on a lead 173 from a conventional analogue multiplier 184. A second input terminal for the amplifier 154 is selectively derived via a scaling amplifier 177 from the two taps of a switch 157, shown for convenience as a relay actuated by an actuator 155 duplicated at the top and bottom of Figure 5 though actually unitary. The rate summing amplifier 154 has an overall gain of o.5. The selectable signals are the output signal $\delta_e$ on a lead 161 of an angle summing amplifier 162 or the elevation error output signal $\epsilon_e$ of an angle track demodulator 166 on leads 163, 165. The inputs of a tachometer summing amplifier 179, poled as shown, include the output signal $\dot{\beta}_c$ of the rate amplifier 154; tachometer summing amplifier 179 supplies its output signal via a lead 153 to drive the elevation torque servomotor 150. The combination of the rate summing amplifier 154, elevation torque motor 150, tachometer 151, tachometer summing amplifier 179 and drive linkage 148 forms the elevation rate servo which is the heart of the elevation drive. The bandwidth of the servo may be 60 Hz, for example. The scaling amplifier 177 multiplies signals received at its input terminal by a predetermined constant K.

In an analogous manner in the azimuth tracking channel, a rate summing amplifier 215 supplies its output via a lead 214 to a tachometer summing amplifier 208. The inputs of the rate summing amplifier 215, poled as shown, include a signal on a lead 198 coming indirectly from a yaw rate gyroscope 195 coupled via a lead 196 to one input of a body rate summing amplifier 197, poled as shown, and a signal on a lead 187 from a analogue multiplier 186. A second amplifier 215 input is selectively derived via a scaling amplifier 206, from the two taps of a switch 216 shown at the bottom of the drawing as also actuated by actuator 155. The rate summing amplifer 215 has a gain of 0.5. The selectable signals are the output signal $\delta_a$ on a lead 220 of an angle summing amplifier 219 or the azimuth error output signal $\epsilon_a$ of the angle track demodulator 166 on lead 201. The inputs of the tachometer summing amplifier 208, poled as shown, include the output signal $\dot{\psi}_c$ of rate amplifier 215; the tachometer summing amplifier 208 supplies its output signal via lead 207 to drive the azimuth torque servomotor 210. The combination of the rate summing amplifer 215, azimuth torque motor 210, tachometer 211, tachometer summing amplifier 208, and drive linkage 149 form the essential parts of the azimuth rate servo in the azimuth drive. The scaling amplifier 206 multiplies signals received at its input terminal by a predetermined consant k.

Signals from a roll rate gyroscope 180 on a lead 181 are used in common in the two aforedescribed elevation and azimuth channels. These roll rate gyroscope signals are coupled in common via branching leads 182, 183 to the respective multipliers 184, 186, which additionally multiply the products of their input signals by a factor of 2. As noted, the antenna azimuth position from the azimuth potentiometer 212 is coupled by a lead 185 as the second input to the multiplier 184; elevation position from the potentiometer 152 is coupled by the lead 159 as a second input to the multiplier 186.

The output of body rate summing amplifier 172, in addition to being supplied to the rate summing amplifier 154 via lead 160, goes to the integrator 175 via a lead 174. The output of integrator 175 is, as noted, fed via lead 176 to one input of the angle summing amplifer 162. In a similar manner, the output of body rate summing amplifier 197, in addition to being coupled into the rate summing amplifier 215 via 198, goes to integrator 200 via lead 199. The output of the integrator 200 is, as noted, fed via lead 218 to one input of the angle summing amplifier 219. A third input terminal of the angle amplifier 162, poled as shown, is coupled to receive the output signal $\beta$ of the potentiometer 152 via the scaling amplifier 169. Similarly, a third input terminal of the angle amplifier 219, poled as shown, is coupled to receive the output signal $\Psi$ of the potentiometer 212 via a scaling amplifier 205. The scaling amplifiers 169 and 206 function to multiply their respective input signals by a factor of 2. It will be understood by those skilled in the art that the angle track demodulators 166 of Figure are analogous to the demodulators 67, 68 of Figure 3; the elevation dmodulator in block 166 supplies a measure of the elevation tracking error $\epsilon_e$ to the elevation error scaling amplifier 177, while the azimuth demodulator in block 166 feeds a measure of the azimuth tracking error $\epsilon_a$ to the azimuth error scaling amplifier 206.

Furthermore, a search command generator 188 is provided to generate command signals $\lambda_{del}$, $\lambda_{daz}$ for application via lead 167, 189 to respective inputs of angle summation amplifiers 162, 219. For initiating angle search, the actuator 155 responds to an input on terminal 156 by placing the two switches 157, 216 in their upper positions. The actuator 155 is driven directly from the acquisition detector 71 of Figure 3. The elevation search error signal $\delta_e$ on the lead 161 is now formed from the summation of the search command signal $\lambda_{del}$ on the lead 167, the elevation reflector plate angle signal $2\beta$ output of the scaling amplifier 169, and the integrated vehicle rate compensation signal received from the output of the integrator 175. The closed servo loop acts to keep the search error signal $\delta_e$ generally small so that the output of potentiometer 152 is closely equal to one-half of the difference between the search command signal on the lead 167 and the integrator output on the lead 176. This implementation compensates for vehicle body motion so that the line of sight angle in space is closely proportional to the search command signal.

During automatic tracking, it is desirable for the antenna stabilisation system to control the antenna reflector plate rate $\dot{\beta}$ according to the equations.

$$\dot{\beta} = 1/2 \, [(\dot{\lambda}_{SE} - \dot{\theta}_p) + 2\dot{\psi}\dot{\phi}_R] \qquad (1)$$

where:

$\dot{\lambda}_{SE} =$         the actual seeker elevation line of sight rate,

$\dot{\theta}_p =$         the vehicle pitch rate,

$\Psi =$         the reflector plate azimuth angle,

$\dot{\phi}_R =$         the vehicle roll rate.

These signals are indicated in Figure 5.

The output signal $\dot{\beta}_c$ of the rate amplifier 154, in the track mode will be

$$\dot{\beta}_c = 1/2 \, (K \, \epsilon_e - \dot{\theta}_p + 2 \, \Psi\dot{\phi}_R) \qquad (2)$$

9

where:

$\epsilon_e$ = angle track elevation error signal provided by the angle track demodulator 166,

K = a constant provided by the scaling amplifier 177.

The basic elevation line of sight control law for the seeker in search and track modes is:

$$\dot{\lambda}_{SE} = K \, ( \lambda_{del} - \lambda_{SE}) \qquad (3)$$

where:

$\lambda_{del}$ = the desired seeker line of sight in elevation,

$\lambda_{SE}$ = the actual seeker line of sight in elevation, and for tracke mode:

$$\lambda_{del} - \lambda_{SE} = \epsilon_e \qquad (4)$$

Thus, from equations (3) and (4)

$$\dot{\lambda}_{SE} = K \, \epsilon_e \qquad (5)$$

This is the signal at the terminal 164 in Figure 5, and in the track mode is coupled to the pitch channel of the automatic pilot. From equations (2) and (5)

$$\dot{\beta}_c = 1/2 \, [(\dot{\lambda}_{SE} - \dot{\theta}_p) + 2 \, \Psi \, \dot{\phi}_R)] \qquad (6)$$

The servo loop, comprising the tachometer summing amplifier 179, the elevation servomotor 150, and the tachometer 151, operates so that the actual plate rate approaches the plate rate command signal $\dot{\beta}_c$, such that:

$$\beta \cong \beta_c \qquad (7)$$

and the results of equation (1) are substantially achieved.

In a similar manner the equation

$$\dot{\psi} = 1/2 \, [( \dot{\lambda}_{SA} - \dot{\theta}_Y) - \beta \, \dot{\phi}_R] \qquad (8)$$

where:

$\dot{\psi}$ = the desired antenna reflector plate azimuth rate,

$\dot{\lambda}_{SA}$ = the actual seeker azimuth line of sight rate,

$\beta$ = the reflector plate elevation angle

is implemented to control the antenna reflector plate in azimuth.

The output signal $\dot{\psi}_c$ of rate amplifier 215 in the track mode will, in like manner of equation (2), be:

$$\dot{\psi}_c = 1/2 \, (K \, \epsilon_a - \dot{\theta}_Y - 2 \, \beta \, \dot{\phi}_R) \qquad (9)$$

and analogous to equation (5)

$$\lambda_{SA} = K \, \epsilon_a \qquad (10)$$

which is the signal at terminal 222, and in the track mode is coupled to the yaw channel of the automatic pilot. Also in a manner similar to that described for elevation control, the azimuth servo loop operates so that the actual plate rate $\dot{\psi}$, approaches the plate rate command $\dot{\psi}_c$, such that

$$\dot{\psi} \cong \Psi_c \qquad (11)$$

and the result of equation (8) is substantially achieved.

During the search mode, the output signal $\dot{\beta}_c$ of the rate amplifier 154 will be, analogous to equation (2)

$$\dot{\beta}_c = 1/2 \, (K \, \delta_e - \dot{\theta}_p + 2 \, \Psi \, \dot{\phi}_R) \qquad (12)$$

where:

$\delta_e$ = the angular error signal in elevation, provided by the angle amplifier 162.

For the search mode,

$$\delta_e = \lambda_{del} - \lambda_{SE} \qquad (13)$$

where $\lambda_{del}$ is obtained on the lead 167, from the search command generator.

The actual seeker line of sight in elevation, $\lambda_{SE'}$ is determined, and subtracted from $\lambda_{del'}$ in the angle amplifier 162, so that:

$$\delta_e = \lambda_{del} - 2\beta - \int(\dot{\theta}_p - 2\Psi\dot{\phi}_R)dt \qquad (14)$$

Multiplication of the error signal $\delta_e$ by K obtains the desired seeker line of sight rate in elevation such that

$$K\delta_e = \dot{\lambda}_{SE} \qquad (15)$$

and equation (3) is satisfied.

In like manner, for the azimuth control in search mode, equation (14) becomes:

$$\delta_a = \lambda_{daz} - 2\Psi - \int(\dot{\theta}_Y + 2\beta\dot{\phi}_R)dt \qquad (16)$$

where $\delta_a$ is provided by the angle amplifier 219 on the lead 220, and $\lambda_{daz'}$ is provided by the search command generator 188 on the lead 189. Equation (15) becomes

$$K\delta_a = \dot{\lambda}_{SA} \qquad (17)$$

and again equation (3) is satisfied.

Referring to Figures 6 and 7, it will be understood by those skilled in the art that the plate azimuth angle $\Psi$ may not be equal to the azimuth motor angle $\Psi_m$ and the plate elevation angle $\beta$ may not be equal to the elevation servomotor angle $\beta_m$. The relation therebetween is approximated by the following equation:

$$\beta = \frac{r_e}{R_e} \sin \beta_m \qquad (18)$$

$$\Psi = \frac{r_a}{R_a} \frac{\sin \Psi_m}{\cos \beta} \qquad (19)$$

where the distances $R_a$, $r_a$, $R_e$, $r_e$ are as shown in Figure 6 and Figure 7.

The rates of change of the plate angles $\dot{\beta}$ and $\dot{\Psi}$ relative to the rate of change of the motor angles $\dot{\beta}_m$ and $\dot{\Psi}_m$ can be found as follows:-

$$\frac{\dot{\beta}}{\dot{\beta}_m} = \frac{\partial\beta}{\partial\beta_m} = \frac{r_e}{R_e} \cos \beta_m \qquad (20)$$

$$\frac{\dot{\Psi}}{\dot{\Psi}_m} = \frac{\partial\Psi}{\partial\Psi_m} = \frac{r_a}{R_a} \frac{\cos \Psi_m}{\cos \beta} \qquad (21)$$

where

$$\frac{\dot{\beta}}{\dot{\beta}_m}$$

determines the azimuth linkage gain and

$$\frac{\dot{\psi}}{\dot{\psi}_m}$$

determines the elevation linkage gain.

Typical values for

$$\frac{r_e}{R_e} \quad and \quad \frac{r_a}{R_a}$$

are 0.25 to 0.35.

The maximum seeker line of sight angle is generally 20 degrees, which requires plate angles $\beta$ and $\Psi$ of 10 degrees, and consequently motor angles $\beta_m$ and $\Psi_m$ of approximately 40 degrees. Most operation, however, will occur at angles having less than half of these values. It is clear that for plate angles less than 5 degrees, the cosine $\beta$ term is close to unity and therefore has little significane. Motor angles $\beta_m$ and $\Psi_m$ of 20 degrees are, however, significant. The cosine of 20 degrees is approximately 0.94, which would ordinarily result in 6% gain reduction with respect to the zero angle case. In the present invention this gain reduction is compensated for by using a tachometer in a feedback configuration, having a gain that is closely proportional to the cosine of the servomotor angle. Over a wide range of frequencies, the rate servomotor gain $\dot{\beta}_m/\dot{\beta}_c$ and $\dot{\psi}_m/\dot{\psi}_c$ are proportional to the reciprocal of the tachometer gain and can be expressed as:

$$\frac{\dot{\beta}_m}{\dot{\beta}_c} = \frac{1}{K_{Tach} \cos \beta_m} \qquad (22)$$

$$\frac{\dot{\psi}_m}{\dot{\psi}_c} = \frac{1}{K_{Tach} \cos \psi_m} \qquad (23)$$

where

$\dot{\beta}_c$ = the total rate command

$K_{Tach}$ = the tachometer gain constant.

Thus the antenna rates $\dot{\beta}$ and $\dot{\psi}$ with respect to the total rate command signal $\dot{\beta}_c$ and $\dot{\psi}_c$ appearing at the servomotor inputs and due to the body rate sensors and angle track demodulator signals can be found as follows:

12

$$\frac{\dot{\beta}}{\dot{\beta}_c} = \left(\frac{\dot{\beta}}{\dot{\beta}_m}\right)\left(\frac{\dot{\beta}_m}{\dot{\beta}_c}\right) = \left(\frac{r_e}{R_e}\cos\beta_m\right)\left(\frac{1}{K_{Tach}\cos\beta_m}\right) \quad (24)$$

$$= \frac{r_e}{R_e K_{Tach}}$$

$$\frac{\dot{\psi}}{\dot{\psi}_c} = \left(\frac{\dot{\psi}}{\dot{\psi}_m}\right)\left(\frac{\dot{\psi}_m}{\dot{\psi}_c}\right) = \frac{r_a}{R_a}\frac{\cos\psi_m}{\cos\beta}\frac{1}{K_{Tach}\cos\psi_m} \quad (25)$$

$$= \frac{r_a}{R_a\cos\beta\, K_{Tach}}$$

As a result, the tachometer non-linearity effectively cancels out the most significant linkage non-linearity.

In the operation of the apparatus of the system (referring to Figure 3), power is supplied to all circuits, including the oscillator 41 and the antenna gimbal torque motors 150, 210. The range search, range track switch 45 is maintained in its upper or range search (RS) position. Likewise, the switch 91 is held in its upper or BRT position by the threshold detector 90. The angle search, track switch 65, 66 is maintained in the angle search position; i.e. to the left in Figure 3. The pattern transmitted by the antenna 20 is pointed downward in elevation at the desired depression angle with respect to the horizon, while it is held centred in azimuth.

After a brief warm-up period, the range search generator 97 is turned on and a periodically varying sawtooth wave is supplied via the lead 48 and the switch 45 to the voltage controlled oscillator 43. Time for one period of the sweep from the range search generator 97 may be one to two seconds. The voltage controlled oscillator 43 generates a much higher frequency periodically varying sawtooth shaped output signal supplied to the drive input of the millimeter wave oscillator 41, which is driven to produce a linearly swept, frequency modulated millimeter carrier wave. The output of the oscillator 41 is connected to the fixed antenna transmit feed horn 252 which projects through the antenna twist plate 102 and is transmitted with vertical polarisation. The transmitted energy is reflected from terrain, appears at the four input feed horns 250, 251, 253 and 254 through the r.f. switches 22 to the low-noise-figure mixer 44, where it is converted to an intermediate frequency. The antenna 20 and other r.f. components and the mixer and preamplifier 44 can be made broad band to maximise their effectiveness in the passive or radiometric mode, if this mode is implemented. A small amount of power coupled from the oscillator 41 serves as a local oscillator signal in the mixer 44. The mixer and preamplifier 44 output is fed to the relatively narrow band i.f. amplifier 80. As the frequency modulation is varied due to the range search generator 97 input to the oscillator 43, the beat frequency $f_b$ between the transmitted and received sawtooth waveforms varies. This variation has direct correspondence to the range of the reflecting surface because the slope of the transmitted (and received) waveform is directly proportional to $f_m$; thus, range search is accomplished by varying $f_m$. The basic FMCW range equation for the seeker concept of this invention is

$$R = \frac{Cf_b}{2f_m \cdot \Delta f} \quad (26)$$

where

R = slant range
C = free space propagation velocity
Δf = the bandwidth of the transmitted FMCW signal

13

$f_b$ = the beat frequency between the transmitted and received FMCW signal, and

$f_m$ = the VCO 43 output signal frequency.

Typically, range search is from greater (below terrain) to lesser (above terrain) ranges, such that, for example, a horizontal trajectory vehicle flying at an altitude where the slant range from seeker to terrain (for a typical depression angle) is 1.2Km, the range search distance will be 1500m to 900m.

The i.f. amplifier 80 output is connected to the limiter-discriminator 88 and the threshold detector 90 which latter controls the range search-track switch 45. When the beat frequency between the transmitted and received millimeter waves appears with sufficient amplitude in the i.f. amplifier 80, exceeding the threshold detector 90 setting, the detector 90 switches the range search-range-track switch to the range track contacts RT. The discriminator 88 output then controls oscillator 43 by connection through the BRT/B + T RT switch 91 and integrator 92. In this background range track mode, range track is accomplished using the full i.f. amplifier bandwidth, and the discriminator thus forms a relatively wide range bin tracker. When range track commences, target angle search is also initiated by a signal from the range search-track threshold detector 90 to the target angle search command generator 69 via terminal 73. The aximuth antenna gimbal position is varied back and forth from its centre position to form a horizontal scan. Target search in the range direction is accomplished inherently by the forward motion of the vehicle.

When a target is illuminated in the search mode, the reflected energy appears at the four receiver input horns 250, 251, 253, and 254, and is then fed through the switch 22 to the mixer and preamplifier 44. The i.f. frequency, which is the aforemetioned beat frequency, is fed to the i.f. amplifier 80. The i.f. amplifier 80 output is fed to the multichannel filter 81 which effectively forms narrow range bins, there being typically 16 bins. The narrow range bin width is determined by the range resolution desired; e.g. one per cent of the slant range and by limitations imposed by the sweep linearity of the oscillator 41 that can be achieved. A lineriser or shaper 42 may be employed to improve upon the basic linearity characteristic of the oscillator 41. Target detection occurs in a single range bin, the nth bin, as the multiplexer 83 scans the range bin outputs. The range resolution available in a single range bin is effective in increasing the target signal-to-background noise $(S/N_B)$ for target detection.

When the target is detected, target acquisition, i.e. initiation of target tracking employing sequential lobing occurs almost immediately, for example in less than 0.2m seconds, thus making target angle track possible. At this time, the target acquisition detector 71 switches the target angle search-track switch 65, 66 to angle track and the antenna azimuth and elevation gimbals are controlled from the angle track demodulators 67, 68. The angle track demodulators 67, 68 generate target annular tracking error signals which serve to drive the antenna gimbals at rates proportional to the measured error. These signals are thus, effectively, proportional to the seeker-to-target line of sight rate. Versions of the same signals are provided to the automatic pilot for proportional navigation guidance purposes.

Also, at the time of target acquisition and the switching to target angle track, the range track BRT/B + T RT switch 91 is switched to the B + T RT position (background plus target) range track. Range track is then accomplished by comparing the outputs of the narrow range adjacent bins (n-1) and (n + 1) on either side of the target track bin (n); thus providing effectively a narrower range gate for range tracking and for terrain and precipitation backscatter clutter rejection. The (n-1) to (n + 1) bin amplitude comparison is accomplished by the differential amplifier 94 of Figure 3. It will be recognised that the bandwidth of the i.f. amplifier 80 must be wide enough to cover the total number of range bins (filters) employed, taking into account the bin bandwidth, the number of bins, and the overlap of the bins. Typical bin overlap is -1 dB for bins adjacent each other. Typical implementation for sixteen 1.2 per cent range resolution bins would be range bin filter 1 MHz wide, with a resultant required i.f. bandwidth of 8 to 9 MHz. This total bandwidth, as discussed previously, would be the wide bin for range search prior to narrow band range track, after target acquisition. Following target track initiation, angle track demodulator error signals continue to control the antenna gimbal angular rates and output signals proportional to line of sight rate in both planes are supplied to the vehicle autopilot for convergent guidance to impact the target.

Also, following target detection and narrow bin (n-1)/(n + 1) range tracking, the range track loop continues to control the oscillator 41 repetition frequency to keep the beat frequency $f_b$ centred with the i.f. band as range shortens during the vehicle approach to the target.

## Claims

1. High frequency, vehicle-coupled, target detecting seeker system having search and track modes and having twist reflector antenna means (102) coupled to receiver means (103), a high frequency target sensor system (104) having search and track modes coupled to the receiver means for detecting the position of the target and for providing signals $(K_{\epsilon_e})$ representative of the difference between the actual and desired line of sight rates of angular change of the antenna with respect to a first predetermined reference in a first direction, and signals ($K_{\epsilon_a}$) representative of the difference between the actual and desired line of sight rate of angular change of the antenna with respect to the first predetermined reference in a second direction orthogonal to the first direction, antenna drive means (150,210) coupled to the twist reflector antenna means and coupled to the target sensor system means for positioning the antenna in the first and second directions according to the target sensor system signals; and antenna control means (106,107,109) coupled to the antenna drive means, characterised in that:

the target sensor system further provides signals $\lambda_{del}$ representative of the desired line of sight angle of the antenna with respect to the first predetermined reference in the first direction, and signals $\lambda_{daz}$ representative of the desired line of sight angle of the antenna with respect to the first predetermined reference in the second direction; in that the system further comprises

first angle sensor means (152) coupled to the antenna drive means for providing signals ($\beta$) representative of the antenna drive means angle in the first direction with respect to the first predetermined reference;

second angle sensor means (212) coupled to the antenna drive means for providing signals ($\psi$) representative of the antenna drive means angle in the second direction with respect to the first predetermined reference;

first vehicle rate sensor means (170) coupled to the vehicle for providing signals ($\dot{\theta}_p$) representative of the angular rate of change of the vehicle in a third direction with respect to a second predetermined reference;

second vehicle rate sensor means (180) coupled to the vehicle for providing signals ($\dot{\phi}_R$) representative of the angular rate of change of the vehicle in a fourth direction orthogonal to the third direction, with respect to the predetermined reference;

third vehicle rate sensor means (195) coupled to the vehicle for providing signals ($\dot{\theta}_Y$) representative of the angular rate of change of the vehicle in a fifth direction orthogonal to the third and fourth directions, with respect to the second predetermined reference; and in that

the antenna control means coupled to the antenna drive means is adapted to receive the signals $K_{\epsilon_e}$, $K_{\epsilon_a}$, $\dot{\theta}_p$, $\dot{\phi}_R$, $\dot{\theta}_Y$, $\beta$, $\psi$, $\lambda_{daz}$ and $\lambda_{del}$ for providing signals in the track mode for controlling the antenna drive means rate of angular change $\dot{\beta}$ in the first direction substantially according to the formula:

$$\dot{\beta} = 1/2\ (K_{\epsilon_e} - \dot{\theta}_p + 2\psi\dot{\phi}_R )$$

and for further providing signals in the track mode for controlling the antenna drive means angular rate of change $\dot{\psi}$ in the second direction substantially according to the formula:

$$\dot{\psi} = 1/2\ (K_{\epsilon_a} - \dot{\theta}_Y - 2\beta\dot{\phi}_R)$$

and for providing signals in the search mode for controlling the antenna drive means angular rate of change $\dot{\beta}$ in the first direction substantially according to the formula:

$$\dot{\beta} = 1/2\ [K( - \smallint(\dot{\theta}_p - 2\dot{\phi}_R\psi)\ dt\ +\ \lambda_{del} - 2\beta) - (\dot{\theta}_p - 2\dot{\phi}_R\psi)]$$

and for further providing signals in the search mode for controlling the antenna drive means angular rate of change $\dot{\psi}$ in the second direction substantially according to the formula:

$$\dot{\psi} = 1/2\ [K( - \smallint(\dot{\theta}_Y + 2\beta\dot{\phi}_R)\ dt\ +\ \lambda_{daz} - 2\psi) - (\dot{\theta}_Y - 2\beta\dot{\phi}_R)].$$

2. A system according to claim 1, characterised in that it further comprises:

transmitter oscillator means (41) coupled to the antenna means (102) for illumination of targets and background by the antenna means, and further coupled to the receiver means (103,44) for generating therein a beat frequency signal in the presence of the illuminated target or background;

transmitter oscillator drive means (42,43) having input terminals and output terminals, the output terminals being coupled to the transmitter oscillator for providing transmitter oscillator drive signals at the output terminals responsive to the amplitude of signals applied to the input terminals, the frequency of the transmitter oscillator signals being responsive to the transmitter oscillator drive signals;

a plurality of range bin means (82) coupled to receive the beat frequency signal, each of the range bins being responsive to illuminated objects in substantially contiguous predetermined ranges and for providing output signals from a bin corresponding to the range of the illuminated target, and for further providing signals from bins corresponding to ranges adjacent the target range;

difference means (94) having input terminals coupled to receive the signals corresponding to ranges adjacent the target for providing, in the tracking mode, a signal representative of the difference in amplitude between the adjacent range bin signals and the oscillator drive means;

frequency discrimination means (88) having input means coupled to receive the beat frequency signal and having output means coupled to the transmitter oscillator drive means for providing, in the tracking mode, background range tracking signals to the transmitter drive means upon departure of the beat frequency from a predetermined frequency value; and

range search generator means (97) switchably coupled to the transmitter oscillator drive means for providing, in the search mode, range search signals.

3. A system according to any of the preceding claims, characterised in that the first direction is the antenna elevation direction, and the second direction is the antenna azimuth direction; and in that the antenna drive means comprises:

an elevation servomotor (61) coupled to the twist reflector antenna (102) for positioning the antenna in the elevation direction; and

an azimuth servomotor (60) coupled to the twist reflector antenna means for positioning the antenna in the azimuth direction;

first rate sensor means (151) coupled to the antenna drive means for providing signals $(\dot{\beta})$ representative of the antenna drive means angular rate of change in the elevation direction;

second rate sensor means (211) coupled to the antenna drive means for providing signals $(\dot{\psi})$ representative of the antenna drive means angular rate of change in the azimuth direction;

first tachometer summing amplifier (179) means having input means responsive to the antenna control means signals and to the first rate sensor means signals, and coupled to the elevation servomotor means, for comparing the antenna control means signals and first rate sensor means signals, to derive an error signal equal to the difference between the input signals for controlling the elevation servomotor; and

second tachometer summing amplifier means (208) having input means responsive to the antenna control means signals and to the first rate sensor means signals, and coupled to the azimuth servomotor means, for comparing the antenna control means signals and second rate sensor means signals to derive an error signal equal to the difference between the input signals for controlling the azimuth servomotor means.

4. A system according to claim 3, characterised in that the first rate sensor means comprises a tachometer (151);

the second rate sensor means comprises a tachometer (211);

the first angle sensor means comprises a variable resistance (152) coupled to the elevation servomotor (150) having an output signal proportional to the angle of the elevation servomotor; and

the second angle sensor comprises a variable resistance (212) coupled to the azimuth servomotor (210) and having an output represenatiave of the angle of the azimuth servomotor.

5. A system according to any of the preceding claims, characterised in that the third, fourth, and fifth directions correspond to the pitch, roll, and yaw directions, respectively of the vehicle, and in that

the first vehicle rate sensor means comprises a pitch rate gyroscope (170);

the second vehicle rate sensor means comprises a roll rate gyroscope (180); and

the third vehicle rate sensor means comprises a yaw rate gyroscope (195).

6. A system according to any of the preceding claims, characterised in that the antenna control means comprises:

first multiplier means (184) coupled to the second vehicle rate sensor means (180) and to the second angle sensor means (212) for multiplying the second rate signal by the second angle signal, and for providing an output signal representative thereof;

a first vehicle rate amplifier (172) coupled to the first vehicle rate sensor (170) and to the first multiplier (184) for substracting the first multiplier output signal from the first rate signal, and for providing an output signal representative thereof;

a first rate summing amplifier (154) switchably responsive to the signal $K_{\epsilon_a}$ and coupled to the first vehicle rate amplifier for subtracting therefrom the output signal of the first vehicle rate amplifier, and multiplying the difference by 0.5, and for providing an ouput signal representative thereof;

16

first integrator means (175) coupled to the first vehicle rate amplifier for integrating the output signal of the first vehicle rate amplifier, and for providing an output signal representative thereof;

a first angle ampifier (162) adapted to receive the signal $\lambda_{del}$ and coupled to the first integrator and to the first angle sensor means for multiplying the first angle sensor means output signal by two and subtracting the multiplication result from the difference between the signal $\lambda_{del}$ and the first integrator output signal, for further multiplying the subtraction result by a constant K, and for further providing an output signal therefrom switchably coupled to the first rate summing amplifier;

second multiplier means (186) coupled to the second vehicle rate sensor means (180) and to the first angle sensor means (152) for multiplying the second rate signal by the first angle signal, and for providing an output signal representative thereof;

a second vehicle rate amplifier (197) coupled to the third vehicle rate sensor (195) and to the second multiplier (186) for adding the second multiplier output signal from the third rate signal, and for providing an output signal representative thereof;

a second rate summing amplifier (215) switchably responsive to the signal $K_{\epsilon_a}$ and coupled to the second vehicle rate amplifier for subtracting therefrom the output signal of the second vehicle rate amplifier, and multiplying the difference by 0.5, and for providing an output signal representative thereof;

second integrator means (200) coupled to the second vehicle rate amplifier for integrating the output signal of the second vehicle rate amplifier, and for providing an output signal representative thereof; and

a second angle amplifier (219) adapted to receive the search command signal $\lambda_{del}$, and coupled to the second integrator and to the second angle sensor means, for multiplying said second angle sensor means output signal by two and subtracting the multiplication result from the difference between the signal $\lambda_{daz}$ and the first integrator output signal, for further multiplying the subtraction result by the constant K, and for further providing an output signal therefrom switchably coupled to said second rate summing amplifier.

7. A system according to claim 6, characterised in that it further comprises:

first switch means (157) having a first input means coupled to the first angle amplifier (162), second input means adapted to receive the signal $K_{\epsilon_e}$, and output means coupled to the first rate amplifier (154) for switchably coupling the first or second input means to the output means of the first switch means;

second switch means (216) having first input means coupled to the second angle amplifier (219), second input means adapted to receive the signal $K_{\epsilon_a}$, and output means coupled to the second rate amplifier (215) for switchably coupling the first or second input means to the output means of the second switch means; and

acquisition detector means (155) responsive to the target range signals and coupled to the first and second switch means for comparing the target range signals to a second predetermined threshold signal, and for actuating the first and second switch means in the presence of a signal greater than the second threshold signal.

8. A system according to claim 2 and any of claims 3 to 7 when appended thereto, characterised in that it further comprises;

third switch means (91) having first input means coupled to the frequency discrimination means (88), second input means coupled to the difference means (94), and output means for switchably coupling the first or second input means to the output means of the third switch means;

fourth switch means (45) having first input means coupled to the range search generator (97), second input means coupled to the third switch means (91) output means, and output means coupled to the transmitter oscillator drive means (42,43) for switchably coupling the first or second input means to the output means of the fourth switch means; and

threshold detector means (90) coupled to the discrimination means for comparing the frequency discrimination signal to predetermined threshold signals, and for actuating the third and fourth switches in the presence of signals greater than the first threshold signal.

9. A system according to claim 2 and any of claims 3 to 8 when appended thereto, characterised in that it further comprises:

fifth switch means (65) having first input means coupled to a search command generator (69) and second input means coupled to the target sensor means (104), and output means coupled to the antenna drive means (42,43) for switchably coupling the first or second input means to the fifth switch output means; and

acquisition detector means (71) coupled to receive the target range bin signals for comparing the target range bin signals to a second predetermined threshold signal, and for actuating the fifth switch means in the presence of a signal greater than the second threshold signals.

10. A system according to claim 2 and any of claims 3 to 9 when appended thereto, characterised in that the range bin means comprises:

a plurality of narrow band filters (81) having substantially contiguous passbands and having input means coupled to receive the beat frequency signal, and ouput means for providing a plurality of output signals each of which is indicative of a target in a corresponding range;

a plurality of detector means (82) coupled to the narrow band filters output means for detecting the amplitude of signals received from the narrow band filters and for providing a plurality of detected output signals; and

multiplexer means (83) coupled to the detector means for selecting one of the detected output signals indicative of the presence of the target in the corresponding range and for providing signals representative thereof, and for further selecting detected output signals indicative of ranges adjacent to said target range.

11. A system according to claim 10, characterised in that the detector means comprises diodes (82).

12. A system according to claim 2 and any of claims 3 to 11 when appended thereto, characterised in that the frequency discrimination means comprises:

limiter means (88) responsive to the beat frequency signal; and

discriminator circuit means (88) responsive to the limiter means.

13. A system according to claim 2 and any of claims 3 to 12 when appended thereto, characterised in that it further comprises integrator means (92) switchably responsive to the difference means (94) and to the frequency discrimination means (88), and having output means switchably coupled to the transmitter oscillator drive means (42,43).

14. A system according to any of the preceding claims, characterised in that it includes means for providing the target range signals as an automatic gain control signal to the receiver means.

15. A system according to any of the preceding claims, characterised in that the target sensor system comprises an azimuth angle demodulator (67) responsive to the target range bin signal for providing azimuth angle error signals ($K_{\epsilon_a}$), and an elevation angle demodulator (68) responsive to the target range bin signal for providing elevation angle error signals ($K_{\epsilon_e}$); and

the antenna drive means comprises elevation and azimuth servomotors (60,61) coupled to the antenna and responsive to the elevation and azimuth demodulators, respectively.

16. A system according to claim 2 and any of claims 3 to 15 when appended thereto, characterised in that the transmitter oscillator drive means comprises a voltage controlled oscillator (43) switchably responsive to the difference means (94) and to the range search generator means (97), and signal lineariser means (42) having an input coupled to the voltage controlled oscillator means and an output coupled to the transmitter oscillator means (41).

**Patentansprüche**

1. Fahrzeuggestütztes Hochfrequenz-Zielverfolgungssystem mit Such- und Verfolgungsmoden, mit einer Schwenkreflektor-Antenneneinrichtung (102), die mit einer Empfängereinrichtung (103) verbunden ist, mit einem Hochfrequenz-Zielsensor system (104) mit Such- und Verfolgungsmoden, das mit der Empfängereinrichtung verbunden ist, zum Detektieren der Position des Zieles und zum Liefern von Signalen ($K_{\epsilon_e}$), die die Differenz zwischen der tatsächlichen und der gewünschten Winkelgeschwindigkeit der Sichtlinie der Antenne in bezug zu einer ersten vorbestimmten Referenz in einer ersten Richtung repräsentieren, und ferner Signale ($K_{\epsilon_a}$) liefert, die die Differenz zwischen der tatsächlichen und der gewünschten Winkelgeschwindigkeit der Sichtlinie der Antenne in bezug zu der ersten vorbestimmten Referenz in einer zweiten, zur ersten Richtung senkrechten Richtung repräsentieren, ferner mit einer Antennenantriebseinrichtung (150, 210), die mit der Schwenkreflektor-Antenneneinrichtung und dem Zielsensorsystem verbunden ist, zum Positionieren der Antenne in der ersten bzw. zweiten Richtung nach Maßgabe der Signale des Zielsensorsystems, und mit einer Antennensteuereinrichtung (106, 107, 109), die mit der Antennenantriebseinrichtung verbunden ist, dadurch gekennzeichnet, daß:

das Zielsensorsystem ferner Signale $\lambda_{del}$ liefert, die den Sichtlinienwinkel der Antenne in bezug zu der ersten vorbestimmten Referenz in der ersten Richtung repräsentieren, und Signale $\lambda_{daz}$ liefert, die den gewünschten Sichtlinienwinkel der Antenne in bezug zu der ersten vorbestimmten Referenz in der zweiten Richtung liefern; daß das System ferner aufweist

eine ersten Winkelsensoreinrichtung (152), die mit der Antennenantriebseinrichtung verbunden ist, zum Liefern von Signalen ($\beta$), die den Winkel der Antennenantriebseinrichtung in der ersten Richtung in bezug zu der ersten vorbestimmten Referenz repräsentieren;

eine zweite Winkelsensoreinrichtung (212), die mit der Antennenantriebseinrichtung verbunden ist, zum Liefern von Signalen ($\psi$), die den Winkel der Antennenantriebseinrichtung in der zweiten Richtung in bezug zu der ersten vorbestimmten Referenz repräsentieren;

eine erste Sensoreinrichtung (170) für die Fahrzeugwinkelgeschwindigkeit, die mit dem Fahrzeug verbunden ist, zum Liefern von Signalen ($\dot{\theta}_p$), die die Winkelgeschwindigkeit des Fahrzeuges in einer dritten Richtung in bezug zu einer zweiten vorbestimmten Referenz repräsentieren;

eine zweite Sensoreinrichtung (180) für die Fahrzeugwinkelgeschwindigkeit, die mit dem Fahrzeug verbunden ist, zum Liefern von Signalen ($\dot{\phi}_R$), die die Winkelgeschwindigkeit des Fahrzeuges in einer vierten, zur dritten Richtung senkrechten Richtung in bezug zu der vorbestimmten Referenz repräsentieren;

eine dritte Sensoreinrichtung (195) für die Fahrzeugwinkelgeschwindigkeit, die mit dem Fahrzeug verbunden ist, zum Liefern von Signalen ($\dot{\theta}_y$), die die Winkelgeschwindigkeit des Fahrzeuges in einer fünften, zu der dritten und vierten Richtung jeweils senkrechten Richtung in bezug zu der zweiten vorbestimmten Referenz repräsentieren, und daß

die mit der Antennenantriebseinrichtung verbundene Antennensteuereinrichtung die Signale $K_{\epsilon_e}$, $K_{\epsilon_a}$, $\dot{\theta}_p$, $\dot{\phi}_R$, $\dot{\theta}_y$, $\beta$, $\psi$, $\lambda_{daz}$ und $\lambda_{del}$ empfängt, um im Zielverfolgungsmodus Signale zum Steuern der Winkelgeschwindigkeit $\dot{\beta}$ der Antennenantriebseinrichtung in der ersten Richtung gemäß der folgenden Formel zu liefern:

$$\dot{\beta} = 1/2 \, (K_{\epsilon_e} - \dot{\theta}_p + 2\psi\dot{\phi}_R)$$

und um ferner im Verfolgungsmodus Signale zum Steuern der Winkelgeschwindigkeit $\dot{\psi}$ der Antennenantriebseinrichtung in der zweiten Richtung entsprechend der Formel zu liefern:

$$\dot{\psi} = 1/2 \, (K_{\epsilon_a} - \dot{\theta}_y - 2\beta\dot{\phi}_R)$$

und um Signale in dem Suchmodus zum Steuern der Winkelgeschwindigkeit $\dot{\beta}$ der Antennenantriebseinrichtung in der ersten Richtung entsprechend der Formel zu liefern:

$$\dot{\beta} = 1/2 \, [K( - \int(\dot{\theta}_p - 2\dot{\phi}_R\psi) \, dt + \lambda_{del} - 2\beta) - (\dot{\theta}_p - 2\dot{\phi}_R\psi)]$$

und um ferner Signale im Suchmodus zum Steuern der Winkelgeschwindigkeit $\dot{\psi}$ der Antennenantriebseinrichtung in der zweiten Richtung entsprechend der Formel zu liefern:

$$\dot{\psi} = 1/2 \, [K( - \int(\dot{\theta}_y + 2\beta\dot{\phi}_R) \, dt + \lambda_{daz} - 2\psi) - (\dot{\theta}_Y - 2\beta\dot{\phi}_R)].$$

2. System nach Anspruch 1, dadurch gekennzeichnet, daß es ferner aufweist:

eine Senderoszillatoreinrichtung (41), die zum Beleuchten von Zielen und Hintergrund mit Hilfe der Antenneneinrichtung mit der Antenneneinrichtung (102) und ferner mit der Empfängereinrichtung (103, 44) verbunden ist, um darin ein Taktfrequenzsignal in Gegenwart des beleuchteten Zieles oder Hintergrundes zu erzeugen;

eine Senderoszillatorantriebseinrichtung (42, 43) mit Eingangs- und Ausgangsanschlüssen, wobei die Ausgangsanschlüsse mit dem Senderoszillator verbunden sind, um Senderoszillatorantriebssignale an den Ausgangsanschlüssen abhängig von der Amplitude der an den Eingangsanschlüssen anliegenden Signalen zu liefern, wobei die Frequenz der Senderoszillatorsignale abhängig von den Senderoszillatorantriebssignalen ist;

mehrere Entfernungszelleneinrichtungen (82) zum Empfang des Taktfrequenzsignales, wobei jede Entfernungszelle auf beleuchtete Objekte in im wesentlichen nahen vorbestimmten Entfernungen anspricht, wobei die Entfernungszelleneinrichtungen (82) Ausgangssignale von einer Zelle entsprechend der Entfernung des beleuchteten Zieles und ferner Signale von den Entfernungszellen entsprechend Entfernungen in der Nachbarschaft der Zielentfernung liefern;

eine Differenzeinrichtung (94) mit Eingangsanschlüssen zum Empfang von Signalen, die Entfernungen in der Nachbarschaft des Zieles entsprechen, um in dem Verfolgungsmodus ein Signal zu liefern, das die Amplitudendifferenz zwischen den benachbarten Entfernungszellensignalen und der Oszillatorantriebseinrichtung repräsentiert;

eine Frequenzdiskriminierungseinrichtung (88) mit einer Eingangsschaltung zum Empfangen des Taktfrequenzsignals und mit einer Ausgangsschaltung, die mit der Senderoszillatorantriebseinrichtung verbunden ist, um in dem Verfolgungsmodus Hintergrundbereichsverfolgungssignale an die Senderantriebseinrichtung bei Abweichen der Taktfrequenz von einem vorbestimmten Frequenzwert zu liefern; und

eine Bereichssuchsignal-Generatoreinrichtung (97), die mit der Senderoszillatorantriebseinrichtung schaltbar verbunden ist, um im Suchmodus Bereichssuchsignale zu liefern.

3. System nach einem der vorhergehenden Ansprüche, dadurch gekennzeichnet, daß die erste Richtung die Antennenelevationsrichtung und die zweite Richtung die Antennenazimuthrichtung ist, und daß die Antennenantriebseinrichtung aufweist:

einen Elevationsservomotor (71), der mit der Schwenkreflektorantenne (102) verbunden ist, zum Positionieren der Antenne in der Elevationsrichtung; und

einen Azimuthservomotor (60), der mit der Schwenkreflektorantenneneinrichtung verbunden ist, zum Positionieren der Antenne in der Azimuthrichtung;

eine erste Winkelgeschwindigkeitssensoreinrichtung (151), die mit der Antennenantriebseinrichtung verbunden ist, zum Liefern von Signalen ($\dot{\beta}$), die die Winkelgeschwindigkeit der Antennenantriebseinrichtung in der Elevationsrichtung repräsentieren;

eine zweite Winkelgeschwindigkeitssensoreinrichtung (211), die mit der Antennenantriebseinrichtung verbunden ist, zum Liefern von Signalen ($\dot{\psi}$), die die Winkelgeschwindigkeit der Antennenantriebseinrichtung in der Azimuthrichtung repräsentieren;

eine erste Tachometersummenverstärkereinrichtung (179), die eine Eingangsschaltung aufweist, welche auf die Signale der Antennensteuereinrichtung und die Signale der ersten Winkelgeschwindigkeitssensoreinrichtung anspricht, und die mit dem Elevationsservomotor verbunden ist, um die Signale der Antennensteuereinrichtung und der ersten Winkelgeschwindigkeitssensoreinrichtung zu vergleichen und ein Fehlersignal zur Steuerung des Elevationsservomotors abzuleiten, das der Differenz zwischen den Eingangssignalen gleicht; und

eine zweite Tachometersummenverstärkereinrichtung (208), die eine Eingangsschaltung aufweist, welche auf die Signale der Antennensteuereinrichtung und der ersten Winkelgeschwindigkeitssensoreinrichtung anspricht, und die mit dem Azimuthservomotor verbunden ist, um die Signale der Antennensteuereinrichtung und der zweiten Winkelgeschwindigkeitssensoreinrichtung zu vergleichen und ein Fehlersignal zum Steuern des Azimuthservomotors abzuleiten, das gleich der Differenz zwischen den Eingangssignalen ist.

4. System nach Anspruch 3, dadurch gekennzeichnet, daß die erste Winkelgeschwindigkeitssensoreinrichtung einen Tachometer (151) aufweist,

die zweite Winkelgeschwindigkeitssensoreinrichtung einen Tachometer (211) aufweist,

die erste Winkelsensoreinrichtung einen variablen, mit dem Elevationsservomotor (150) verbundenen Widerstand (152) aufweist, an dem ein Ausgangssignal proportional dem Winkel des Elevationsservomotors anliegt, und

die zweite Winkelsensoreinrichtung einen variablen, mit dem Azimuthservomotor (210) verbundenen Widerstand (212) aufweist, an dem ein Ausgangssignal anliegt, das den Winkel des Azimuthservomotors repräsentiert.

5. System nach einem der vorhergehenden Ansprüche, dadurch gekennzeichnet, daß die dritte, vierte und fünfte Richtung jeweils der Nick-, Roll- bzw. Gierrichtung des Fahrzeuges entspricht, und daß die erste Sensoreinrichtung für die Fahrzeugwinkelgeschwindigkeit einen Nickgeschwindigkeitskreisel (170),

die zweite Sensoreinrichtung für die Fahrzeugwinkelgeschwindigkeit einen Rollgeschwindigkeitskreisel (180) und

die dritte Sensoreinrichtung für die Fahrzeugwinkelgeschwindigkeit einen Giergeschwindigkeitskreisel (195) aufweist.

6. System nach einem der vorhergehenden Ansprüche, dadurch gekennzeichnet, daß die Antennensteuereinrichtung aufweist:

eine erste Multipliziereinrichtung (184), die mit der zweiten Sensoreinrichtung (180) für die Fahrzeugwinkelgeschwindigkeit und mit der zweiten Winkelsensoreinrichtung (212) verbunden ist, zum Multiplizieren des zweiten Winkelgeschwindigkeitssignals mit dem zweiten Winkelsignal und zum Liefern eines entsprechenden Ausgangssignales;

einen ersten Fahrzeugwinkelgeschwindigkeitsverstärker (172), der mit dem ersten Sensor (170) für die Fahrzeugwinkelgeschwindigkeit und mit dem ersten Multiplizierer (184) verbunden ist, zum Subtrahieren des Ausgangssignals des ersten Multiplizierers von dem ersten Winkelgeschwindigkeitssignal und zum Liefern eines hierzu entsprechenden Ausgangssignals;

einen ersten Geschwindigkeitssummierverstärker (154), der geschaltet auf das Signal ($K_{\epsilon_e}$) anspricht und mit dem ersten Fahrzeugwinkelgeschwindigkeitsverstärker verbunden ist, zum Subtrahieren von dem Signal das Ausgangssignal des ersten Fahrzeugwinkelgeschwindigkeitsverstärkers, zum Multiplizieren der Differenz mit 0,5 und zum Liefern eines hierzu entsprechenden Ausgangssignals;

eine erste Integratoreinrichtung (175), die mit dem ersten Fahrzeugwinkelgeschwindigkeitsverstärker verbunden ist, zum Integrieren des Ausgangssignals des ersten Fahrzeugwinkelgeschwindigkeitsverstärkers und zum Liefern eines hierzu entsprechenden Ausgangssignales;

einen ersten Winkelverstärker (162) Rum Empfang des Signals $\lambda_{del}$, der mit der ersten Integratoreinrichtung und der ersten Winkelsensoreinrichtung verbunden ist, zum Multiplizieren des Ausgangssignales der ersten Winkelsensoreinrichtung mit Zwei und zum Subtrahieren des Multiplikationsergebnisses von der Differenz zwischen dem Signal $\lambda_{del}$ und dem Ausgangssignal der ersten Integratoreinrichtung und ferner zum Multiplizieren des Subtraktionsergebnisses mit einer konstanten K und zum Liefern eines Ausgangssignales daraus, wobei der erste Winkelverstärker schaltbar mit dem ersten Geschindigkeitssummenverstärker verbunden ist;

eine zweite Multipliziereinrichtung (186), die mit der zweiten Sensoreinrichtung für die Fahrzeugwinkelgeschwindigkeit (180) und der ersten Winkelsensoreinrichtung (152) verbunden ist, zum Multiplizieren des zweiten Geschwindigkeitssignales mit dem ersten Winkelsignal und zum Liefern eines hierzu entsprechenden Ausgangssignales;

einen zweiten Fahrzeugwinkelgeschwindigkeitsverstärker (197), der mit dem dritten Fahrzeugwinkelgeschwindigkeitssensor (195) und mit dem zweiten Multiplizierer (186) verbunden ist, zum Addieren des Ausgangssignales des zweiten Multiplizierers zu dem dritten Geschwindigkeitssignal und zum Liefern eines hierzu entsprechenden Ausgangssignales;

einen zweiten Geschwindigkeitssummierverstärker (215), der schaltbar auf das Signal $K_{\epsilon_a}$ anspricht und mit dem zweiten Fahrzeugwinkelgeschwindigkeitsverstärker verbunden ist, zum Subtrahieren von diesem Signal das Ausgangssignal des zweiten Fahrzeugwinkelgeschwindigkeitsverstärkers und zum Multiplizieren der Differenz mit 0,5 sowie zum Liefern eines hierzu entsprechenden Ausgangssignales;

eine zweite Integratoreinrichtung (200), die mit dem zweiten Fahrzeugwinkelgeschwindigkeitsverstärker verbunden ist, zum Integrieren des Ausgangssignales des zweiten Fahrzeugwinkelgeschwindigkeitsverstärkers und zum Liefern eines hierzu entsprechenden Ausgangssignales; und

einen zweiten Winkelverstärker (219) zum Empfang des Suchkommandosignals $\lambda_{del}$, welcher mit der zweiten Integratoreinrichtung und der zweiten Winkelsensoreinrichtung verbunden ist, zum Multiplizieren des Ausgangssignals wer zweiten Winkelsensoreinrichtung mit Zwei und zum Subtrahieren des Multiplikationsergebnisses von der Differenz zwischen dem Signal $\lambda_{daz}$ und dem Ausgangssignal des ersten Integrators, ferner zum Multiplizieren des Subtraktionsergebnisses mit der konstanten K und schließlich zum Liefern eines hierzu entsprechenden Ausgangssignales, welches schaltbar zu dem zweiten Geschwindigkeitssummierverstärkergeleitet wird.

7. System nach Anspruch 6, dadurch gekennzeichnet, daß es ferner aufweist:

eine erste Schalteinrichtung (157) mit einer ersten Eingangsschaltung, die mit dem ersten Winkelverstärker (162) verbunden ist, mit einer zweiten Eingangsschaltung zum Empfang des Signales $K_{\epsilon_a}$ und mit einer Ausgangsschaltung, die zu dem ersten Geschwindigkeitsverstärker (154) verbunden ist, um die erste oder zweite Eingangsschaltung mit der Ausgangsschaltung der ersten Schalteinrichtung schaltbar zu verbinden;

eine zweite Schalteinrichtung (216) mit einer ersten Eingangsschaltung, die mit dem zweiten Winkelverstärker (219) verbunden ist, mit einer zweiten Eingangsschaltung zum Empfang des Signales $K_{\epsilon_a}$ und

mit einer Ausgangsschaltung, die mit dem zweiten Geschwindigkeitsverstärker (215) verbunden ist, um die erste oder zweite Eingangsschaltung mit der Ausgangsschaltung der zweiten Schalteinrichtung schaltbar zu verbinden; und

eine Aquisitionsdetektoreinrichtung (155), die auf die Zielentfernungssignale anspricht und mit der ersten und zweiten Schalteinrichtung verbunden ist, um die Zielentfernungssignale mit einem zweiten vorbestimmten Schwellensignal zu vergleichen und zum Betätigen der ersten und zweiten Schalteinrichtung bei einem Signal, das größer als das zweite Schwellensignal ist.

8. System nach Anspruch 2 und einem der Ansprüche 3 bis 7, wenn hiervon abhängig, dadurch gekennzeichnet, daß es ferner aufweist:

eine dritte Schalteinrichtung (91) mit einer ersten Eingangsschaltung, die mit der Frequenzdiskriminierungseinrichtung (88) verbunden ist, mit einer zweiten Eingangsschaltung, die mit der Differenzeinrichtung (94) verbunden ist, und mit einer Ausgangsschaltung zum schaltbaren Verbinden der ersten oder zweiten Eingangsschaltungen mit der Ausgangsschaltung der dritten Schalteinrichtung;

eine vierte Schalteinrichtung (45) mit einer ersten Eingangsschaltung, die mit dem Bereichssuchgenerator (97) verbunden ist, mit einer zweiten Eingangsschaltung, die mit der Ausgangsschaltung der dritten Schalteinrichtung (91) verbunden ist, und mit einer Ausgangsschaltung, die mit der Senderoszillatorantriebseinrichtung (42, 43) verbunden ist, zum schaltbaren Verbinden der ersten oder zweiten Eingangsschaltung mit der Ausgangsschaltung der vierten Schalteinrichtung; und

eine Schwellendetektoreinrichtung (90), die mit der Diskriminierungseinrichtung verbunden ist, zum Vergleichen des Frequenzdiskriminierungssignales mit vorbestimmten Schwellensignalen und zum Betätigen der dritten und vierten Schalter bei Signalen, die größer als das erste Schwellensignal sind.

9. System nach Anspruch 2 und einem der Ansprüche 3 bis 8, wenn von diesen abhängig, dadurch gekennzeichnet, daß es ferner aufweist:

eine fünfte Schalteinrichtung (65) mit einer ersten Eingangsschaltung, die mit einem Suchkommandogenerator (69) verbunden ist, mit einer zweiten Eingangsschaltung, die mit der Zielsucheinrichtung (104) verbunden ist, und mit einer Ausgangsschaltung, die mit der Antennenantriebseinrichtung (42, 43) verbunden ist, um schaltbar die erste oder zweite Eingangsschaltung mit der Ausgangsschaltung der fünften Schalteinrichtung zu verbinden; und

eine Aquisitionsdetektoreinrichtung (71) zum Empfang der Zielentfernungszellsignale zum Vergleichen der Zielentfernungszellsignale mit einem zweiten vorbestimmten Schwellensignal und zum Betätigen der fünften Schalteinrichtung bei einem Signal, das größer ist als das zweite Schwellensignal.

10. System nach Anspruch 2 und einem der Ansprüche 3 bis 9, sofern von diesen abhängig, dadurch gekennzeichnet, daß die Entfernungszelleneinrichtung aufweist:

mehrere Schmalbandfilter (81), die benachbarte Bandpässe und eine Eingangsschaltung zum Empfang des Taktfrequenzsignales sowie eine Ausgangsschaltung aufweisen, zum Liefern mehrerer Ausgangssignale, von denen jedes ein Hinweis auf ein Ziel in einer entsprechenden Entfernung ist;

mehrere Detektoreinrichtungen (82), die mit der Ausgangsschaltung der Schmalbandfilter verbunden sind, zum Detektieren der Amplitude der von den Schmalbandfiltern empfangenen Signale und zum Liefern mehrerer detektierter Ausgangssignale; und

eine Multiplexeinrichtung (83), die mit der Detektoreinrichtung verbunden ist, zum Auswählen eines der detektierten Ausgangssignale, die einen Hinweis auf ein Ziel in einer entsprechenden Entfernung geben, und zum Liefern von hierzu entsprechenden Signalen sowie ferner zum Auswählen von detektierten Ausgangssignalen, die einen Hinweis auf Entfernungen in der Nachbarschaft der Zielentfernung geben.

11. System nach Anspruch 10, dadurch gekennzeichnet, daß die Detektoreinrichtung Dioden (82) aufweist.

12. System nach Anspruch 2 und einem der Ansprüche 3 bis 11, sofern hiervon abhängig, dadurch gekennzeichnet, daß die Frequenzdiskriminierungseinrichtung aufweist:

eine Begrenzereinrichtung (88), die auf das Taktfrequenzsignal anspricht und eine Diskriminatorschaltung (88), die auf die Begrenzereinrichtung anspricht.

13. System nach Anspruch 2 und einem der Ansprüche 3 bis 12, sofern hiervon abhängig, dadurch gekennzeichnet, daß es ferner eine Integratoreinrichtung (92) aufweist, die schaltbar auf die Differenzeinrichtung (94) und die Frequenzdiskriminierungseinrichtung (88) anspricht und die eine Ausgangsschaltung aufweist, welche schaltbar mit der Senderoszillatorantriebseinrichtung (42, 43) verbunden ist.

14. System nach einem der vorhergehenden Ansprüche, dadurch gekennzeichnet, daß es eine Einrichtung zum Liefern von Zielentfernungssignalen als Steuersignale für die automatische Verstärkung der Empfängereinrichtung aufweist.

15. System nach einem der vorhergehenden Ansprüche, dadurch gekennzeichnet, daß das Zielsensorsystem einen Azimuthdemodulator (67), der auf das Zielentfernungszellensignal zum Liefern von Azimuthfehlersignalen $K_{\epsilon_a}$ anspricht, und einen Elevationsdemodulator (68) aufweist, der auf das Zielentfernungszellensignal zum Liefern eines Elevationsfehlersignals $K_{\epsilon_e}$ anspricht, und daß die Antennenantriebseinrichtung Elevations- und Azimuthservomotoren (60, 61) aufweist, die mit der Antenne verbunden sind und auf die Elevations- bzw. Azimuthdemodulatoren ansprechen.

16. System nach Anspruch 2 und einem der Ansprüche 3 bis 15, sofern hiervon abhängig, dadurch gekennzeichnet, daß die Senderoszillatorantriebseinrichtung einen spannungsgesteuerten Oszillator (43), der schaltbar auf die Differenzeinrichtung (94) und die Bereichssuchgeneratoreinrichtung (97) anspricht, und eine Signallinearisiereinrichtung (42) aufweist mit einem Eingang, der mit dem spannungsgesteuerten Oszillator verbunden ist, und mit einem Ausgang, der mit der Senderoszillatoreinrichtung verbunden ist.

**Revendications**

1. Système de recherche de détection de cible à haute fréquence, couplé à un véhicule, ayant des modes de recherche et de poursuite et ayant des moyens d'antenne à réflecteur pivotant (102) couplés à des moyens récepteurs (103); un système détecteur de cible à haute fréquence (104) ayant des modes de recherche et de poursuite couplés aux moyens récepteurs pour détecter la position de la cible et pour fournir des signaux ($K_{\epsilon_e}$) représentatifs de la différence entre les vitesses réelle et désirée de la variation angulaire de l'antenne en visibilité directe par rapport à une première référence prédéterminée dans une première direction, et des signaux ($K_{\epsilon_a}$) représentatifs de la différence entre les vitesses réelle et désirée de la variation angulaire de l'antenne en visibilité directe par rapport à la première référence prédéterminée dans une deuxième direction orthogonale par rapport à la première direction; des moyens de commande d'antenne (150,210) couplés aux moyens d'antenne à réflecteur pivotant et couplés aux moyens du système détecteur de cible pour positionner l'antenne dans les première et deuxième directions selon les signaux du système détecteur de cible; et des moyens de réglage d'antenne (106,107,109) couplés aux moyens de commande d'antenne, caractérisé en ce que :
   - le système détecteur de cible fournit en outre des signaux $\lambda_{del}$ représentatifs de l'angle désiré de visibilité directe de l'antenne par rapport à la première référence prédéterminée dans la première direction, et des signaux $\lambda_{daz}$ représentatifs de l'angle désiré de visibilité directe de l'antenne par rapport à la première référence prédéterminée dans la deuxième direction; en ce que le système comprend en outre :
   - des premiers moyens détecteurs d'angle (152) couplés aux moyens de commande d'antenne pour fournir des signaux ($\beta$) représentatifs de l'angle des moyens de commande d'antenne dans la première direction par rapport à la première référence prédéterminée;
   - des deuxièmes moyens détecteurs d'angle (212) couplés aux moyens de commande d'antenne pour fournir des signaux ($\psi$) représentatifs de l'angle des moyens de commande d'antenne dans la deuxième direction par rapport à la première référence prédéterminée;
   - des premiers moyens détecteurs de vitesse du véhicule (170) couplés au véhicule pour fournir des signaux ($\dot{\theta}_p$) représentatifs de la vitesse angulaire de variation du véhicule dans une troisième direction par rapport à une deuxième référence prédéterminée;
   - des deuxièmes moyens détecteurs de vitesse du véhicule (180) couplés au véhicule pour fournir des signaux ($\dot{\phi}_R$) représentatifs de la vitesse angulaire de variation du véhicule dans une quatrième direction, orthogonale par rapport à la troisième direction, par rapport à la deuxième référence prédéterminée;
   - des troisièmes moyens détecteurs de vitesse du véhicule (195) couplés au véhicule pour fournir des signaux ($\dot{\theta}_Y$) représentatifs de la vitesse angulaire de variation du véhicule dans une cinquième direction, orthogonale par rapport aux troisième et quatrième directions, par rapport à la deuxième référence prédéterminée; et en ce que :
   - les moyens de réglage d'antenne couplés aux moyens de commande d'antenne sont adaptés pour recevoir les signaux $K_{\epsilon_e}$, $K_{\epsilon_a}$, $\dot{\theta}_p$, $\dot{\phi}_R$, $\dot{\theta}_Y$, $\beta$, $\psi$, $\lambda_{daz}$ et $\lambda_{del}$, pour fournir des signaux en mode de poursuite pour régler la vitesse angulaire de variation $\dot{\beta}$ des moyens de commande d'antenne dans la première direction sensiblement selon la formule :

$$\dot{\beta} = 1/2 \, (K_{\epsilon_e} - \dot{\theta}_p + 2 \, \psi \, \dot{\phi}_R )$$

et pour fournir en outre des signaux en mode de poursuite pour régler la vitesse angulaire de variation $\dot{\psi}$ des moyens de commande d'antenne dans la deuxième direction sensiblement selon la formule :

$$\dot{\psi} = 1/2 \, (K_{\epsilon_a} - \dot{\theta}_Y + 2 \, \beta \, \dot{\phi}_R)$$

et pour fournir des signaux en mode de recherche pour régler la vitesse angulaire de variation $\dot{\beta}$ des moyens de commande d'antenne dans la première direction sensiblement selon la formule :

$$\dot{\beta} = 1/2 \, [K \, (-\smallint(\dot{\theta}_p - 2 \, \dot{\phi}_R \psi)dt + \lambda_{del} - 2\beta) - (\dot{\theta}_p - 2 \, \dot{\phi}_R \psi)]$$

et pour fournir en outre des signaux en mode de recherche pour régler la vitesse angulaire de variation $\dot{\psi}$ des moyens de commande d'antenne dans la deuxième direction sensiblement selon la formule :

$$\dot{\psi} = 1/2 \, [K \, (-\smallint(\dot{\theta}_Y - 2 \, \beta \dot{\phi}_R)dt + \lambda_{daz} - 2\psi) - (\dot{\theta}_Y - 2 \, \beta \dot{\phi}_R)].$$

2. Système selon la revendication 1, caractérisé en ce qu'il comprend en outre :
   - des moyens à oscillateur émetteur (41) couplés aux moyens d'antenne (102) pour l'illumination de cibles et du fond par les moyens d'antenne, et couplés en outre aux moyens récepteurs (103,44) pour y engendrer un signal de fréquence de battement en présence de la cible ou du fond illuminés;
   - des moyens de commande de l'oscillateur émetteur (42,43) ayant des bornes d'entrée et des bornes de sortie, les bornes de sortie étant couplées à l'oscillateur émetteur pour fournir des signaux de commande de l'oscillateur émetteur aux bornes de sortie sensibles à l'amplitude de signaux appliqués aux bornes d'entrée, la fréquence des signaux de l'oscillateur émetteur étant sensible aux signaux de commande de l'oscillateur émetteur;
   - une pluralité de moyens de gammes de distance (82) couplée pour recevoir le signal de fréquence de battement, chacune des gammes de distance étant sensible à des objets illuminés à des distances prédéterminées sensiblement contiguës, pour fournir des signaux de sortie à partir d'une gamme correspondant à la distance de la cible illuminée, et pour fournir en outre des signaux à partir de gammes correspondant à des distances adjacentes à la distance de la cible;
   - des moyens de différence (94) ayant des bornes d'entrée couplées pour recevoir les signaux correspondants à des distances adjacentes à la cible pour fournir, en mode de poursuite, un signal représentatif de la différence d'amplitude entre les signaux des gammes de distance adjacente et les moyens de commande de l'oscillateur;
   - des moyens de discrimination de fréquence (88) ayant des moyens d'entrée couplés pour recevoir le signal de fréquence de battement et ayant des moyens de sortie couplés aux moyens de commande de l'oscillateur émetteur pour fournir, en mode de poursuite, des signaux de poursuite de distance de fond aux moyens de commande de l'émetteur lors de la déviation de la fréquence de battement d'une valeur de fréquence prédéterminée; et
   - des moyens à générateur de recherche de distance (97) couplés par commutation aux moyens de commande de l'oscillateur émetteur pour fournir, en mode de recherche, des signaux de recherche de distance.

3. Système selon l'une quelconque des revendications précédentes, caractérisé en ce que la première direction est la direction d'élévation de l'antenne, et la deuxième direction est la direction azimutale de l'antenne; et en ce que les moyens de commande d'antenne comprennent :
   - un servomoteur d'élévation (61) couplé à l'antenne à réflecteur pivotant (102) pour positionner l'antenne dans la direction d'élévation;
   - un servomoteur azimutal (60) couplé aux moyens d'antenne à réflecteur pivotant pour positionner l'antenne dans la direction azimutale;

- des premiers moyens détecteurs de vitesse (151) couplés aux moyens de commande d'antenne pour fournir des signaux $(\dot{\beta})$ représentatifs de la vitesse angulaire de variation des moyens de commande d'antenne dans la direction d'élévation;
- des deuxièmes moyens détecteurs de vitesse (211) couplés aux moyens de commande d'antenne pour fournir des signaux $(\dot{\psi})$ représentatifs de la vitesse angulaire de variation des moyens de commande d'antenne dans la direction azimutale;
- des premiers moyens à amplificateur de sommation tachymétrique (179) ayant des moyens d'entrée sensibles aux signaux des moyens de réglage d'antenne et aux signaux des premiers moyens détecteurs de vitesse, et couplés aux moyens à servomoteur d'élévation, pour comparer les signaux des moyens de réglage d'antenne et les signaux des premiers moyens détecteurs de vitesse, pour déduire un signal d'erreur égal à la différence entre les signaux d'entrée pour régler le servomoteur d'élévation; et
- des deuxièmes moyens à amplificateur de sommation tachymétrique (208) ayant des moyens d'entrée sensibles aux signaux des moyens de réglage d'antenne et aux signaux des deuxièmes moyens détecteurs de vitesse, et couplés aux moyens à servomoteur azimutal, pour comparer les signaux des moyens de réglage d'antenne et les signaux des deuxièmes moyens détecteurs de vitesse, pour déduire un signal d'erreur égal à la différence entre les signaux d'entrée pour régler les moyens à servomoteur azimutal.

4. Système selon la revendication 3, caractérisé en ce que :
- les premiers moyens détecteurs de vitesse comprennent un tachymètre (151);
- les deuxièmes moyens détecteurs de vitesse comprennent un tachymètre (211);
- les premiers moyens détecteurs d'angle comprennent une résistance variable (152) couplée au servomoteur d'élévation (150) et ayant un signal de sortie proportionnel à l'angle du servomoteur d'élévation; et
- les deuxièmes moyens détecteurs d'angle comprennent une résistance variable (212) couplée au servomoteur azimutal (210) et ayant une sortie représentative de l'angle du servomoteur azimutal.

5. Système selon l'une quelconque des revendications précédentes, caractérisé en ce que les troisième, quatrième et cinquième directions correspondent aux directions de tangage, de roulis et de lacet, respectivement, du véhicule, et en ce que :
- les premiers moyens détecteurs de vitesse du véhicule comprennent un gyroscope de vitesse de tangage (170);
- les deuxièmes moyens détecteurs de vitesse du véhicule comprennent un gyroscope de vitesse de roulis (180); et
- les troisièmes moyens détecteurs de vitesse du véhicule comprennent un gyroscope de vitesse de lacet (195).

6. Système selon l'une quelconque des revendications précédentes, caractérisé en ce que les moyens de réglage d'antenne comprennent :
- des premiers moyens multiplicateurs (184) couplés aux deuxièmes moyens détecteurs de vitesse du véhicule (180) et aux deuxièmes moyens détecteurs d'angle (212) pour multiplier le deuxième signal de vitesse par le deuxième signal d'angle, et pour fournir un signal de sortie représentatif de ceci;
- un premier amplificateur de vitesse du véhicule (172) couplé au premier détecteur de vitesse du véhicule (170) et au premier multiplicateur (184) pour soustraire le signal de sortie du premier multiplicateur du premier signal de vitesse, et pour fournir un signal de sortie représentatif de ceci;
- un premier amplificateur de sommation de vitesse (154) sensible, par commutation, au signal $K\epsilon_e$ et couplé au premier amplificateur de vitesse du véhicule, pour soustraire de ce signal le signal de sortie du premier amplificateur de vitesse du véhicule, pour multiplier la différence par 0,5, et pour fournir un signal de sortie représentatif de ceci;
- des premiers moyens intégrateurs (175) couplés au premier amplificateur de vitesse du véhicule, pour intégrer le signal de sortie du premier amplificateur de vitesse du véhicule, et pour fournir un signal de sortie représentatif de ceci;
- un premier amplificateur d'angle (162) adapté pour recevoir le signal $\lambda_{del}$, couplé au premier intégrateur et aux premiers moyens détecteurs d'angle pour multiplier le signal de sortie des premiers moyens détecteurs d'angle par deux, pour soustraire le résultat de la multiplication de la différence entre le signal $\lambda_{del}$ et le signal de sortie du premier intégrateur, pour multiplier ensuite le résultat de la soustraction par une constante K et pour fournir ensuite un signal de sortie à partir de ceci, couplé au premier amplificateur de sommation de vitesse;

- des deuxièmes moyens multiplicateurs (186) couplés aux deuxièmes moyens détecteurs de vitesse du véhicule (180) et aux premiers moyens détecteurs d'angle (152) pour multiplier le deuxième signal de vitesse par le premier signal d'angle, et pour fournir un signal de sortie représentatif de ceci;

- un deuxième amplificateur de vitesse du véhicule (197) couplé au troisième détecteur de vitesse du véhicule (195) et au deuxième multiplicateur (186) pour ajouter le signal de sortie du deuxième multiplicateur au troisième signal de vitesse, et pour fournir un signal de sortie représentatif de ceci;

- un deuxième amplificateur de sommation de vitesse (215) sensible, par commutation, au signal $K_{\epsilon_a}$ et couplé au deuxième amplificateur de vitesse du véhicule, pour soustraire de ce signal le signal de sortie du deuxième amplificateur de vitesse du véhicule, pour multiplier la différence par 0,5, et pour fournir un signal de sortie représentatif de ceci;

- des deuxièmes moyens intégrateurs (200) couplés au deuxième amplificateur de vitesse du véhicule, pour intégrer le signal de sortie du deuxième amplificateur de vitesse du véhicule, et pour fournir un signal de sortie représentatif de ceci; et

- un deuxième amplificateur d'angle (219) adapté pour recevoir le signal de commande de recherche $\lambda_{daz}$, couplé au deuxième intégrateur et aux deuxièmes moyens détecteurs d'angle, pour multiplier ledit signal de sortie des deuxièmes moyens détecteurs d'angle par deux, pour soustraire le résultat de la multiplication de la différence entre le signal $\lambda_{daz}$ et le signal de sortie du deuxième intégrateur, pour multiplier ensuite le résultat de la soustraction par la constante K et pour fournir ensuite un signal de sortie à partir de ceci, couplé audit deuxième amplificateur de sommation de vitesse.

7. Système selon la revendication 6, caractérisé en ce qu'il comprend en outre :
- des premiers moyens de commutation (157) ayant des premiers moyens d'entrée couplés au premier amplificateur d'angle (162), des deuxièmes moyens d'entrée adaptés pour recevoir le signal $K_{\epsilon_e}$, et des moyens de sortie couplés au premier amplificateur de vitesse (154) pour coupler par commutation les premiers ou les deuxièmes moyens d'entrée aux moyens de sortie des premiers moyens de commutation;

- des deuxièmes moyens de commutation (216) ayant des premiers moyens d'entrée couplés au deuxième amplificateur d'angle (219), des deuxièmes moyens d'entrée adaptés pour recevoir le signal $K_{\epsilon_a}$, et des moyens de sortie couplés au deuxième amplificateur de vitesse (215) pour coupler par commutation les premiers ou les deuxièmes moyens d'entrée aux moyens de sortie des deuxièmes moyens de commutation; et

- des moyens détecteurs d'acquisition (155) sensibles aux signaux de distance de la cible et couplés aux premiers et deuxièmes moyens de commutation pour comparer les signaux de distance de la cible à un deuxième signal de seuil prédéterminé, et pour actionner les premiers et deuxièmes moyens de commutation en présence d'un signal supérieur au deuxième signal de seuil.

8. Système selon la revendication 2 et l'une quelconque des revendications 3 à 7 qui y sont annexées, caractérisé en ce qu'il comprend en outre :
- des troisièmes moyens de commutation (91) ayant des premiers moyens d'entrée couplés aux moyens de discrimination de fréquence (88), des deuxièmes moyens d'entrée couplés aux moyens de différence (94), et des moyens de sortie pour coupler par commutation les premiers ou les deuxièmes moyens d'entrée aux moyens de sortie des troisièmes moyens de commutation;

- des quatrièmes moyens de commutation (45) ayant des premiers moyens d'entrée couplés au générateur de recherche de distance (97), des deuxièmes moyens d'entrée couplés aux moyens de sortie des troisièmes moyens de commutation (91), et des moyens de sortie couplés aux moyens de commande de l'oscillateur émetteur (42,43) pour coupler par commutation les premiers ou les deuxièmes moyens d'entrée aux moyens de sortie des quatrièmes moyens de commutation; et

- des moyens détecteurs de seuil (90) couplés aux moyens de discrimination pour comparer le

EP 0 276 530 B1

signal de discrimination de fréquence à des signaux de seuil prédéterminés, et pour actionner les troisième et quatrième commutateurs en présence de signaux supérieurs au premier signal de seuil.

9. Système selon la revendication 2 et l'une quelconque des revendications 3 à 8 qui y sont annexées, caractérisé en ce qu'il comprend en outre :
   - des cinquièmes moyens de commutation (65) ayant des premiers moyens d'entrée couplés à un générateur de commande de recherche (69), des deuxièmes moyens d'entrée couplés aux moyens détecteurs de cible (104), et des moyens de sortie couplés aux moyens de commande d'antenne (42,43) pour coupler par commutation les premiers ou les deuxièmes moyens d'entrée aux moyens de sortie des cinquièmes moyens de commutation; et
   - des moyens détecteurs d'acquisition (71) couplés pour recevoir les signaux de gamme de distance de la cible, pour comparer les signaux de gamme distance de la cible à un deuxième signal de seuil prédéterminé, et pour actionner les cinquièmes moyens de commutation en présence d'un signal supérieur aux deuxièmes signaux de seuil.

10. Système selon la revendication 2 et l'une quelconque des revendications 3 à 9 qui y sont annexées, caractérisé en ce que les moyens de gamme de distance comprennent :
    - une pluralité de filtres de bande étroite (81) ayant des bandes passantes sensiblement contiguës, ayant des moyens d'entrée couplés pour recevoir le signal de fréquence de battement, et des moyens de sortie pour fournir une pluralité de signaux de sortie dont chacun est indicatif d'une cible à une distance correspondante;
    - une pluralité de moyens détecteurs (82) couplés aux moyens de sortie des filtres de bande étroite pour détecter l'amplitude de signaux reçus à partir des filtres de bande étroite et pour fournir une pluralité de signaux de sortie détectés; et
    - des moyens de multiplexage (83) couplés aux moyens détecteurs pour sélectionner un des signaux de sortie détectés indicatifs de la présence de la cible à la distance correspondante et pour fournir des signaux représentatifs de ceci, et pour sélectionner en outre des signaux de sortie détectés indicatifs de distances adjacentes à ladite distance de la cible.

11. Système selon la revendication 10, caractérisé en ce que les moyens détecteurs comprennent des diodes (82).

12. Système selon la revendication 2 et l'une quelconque des revendications 3 à 11 qui y sont annexées, caractérisé en ce que les moyens de discrimination de fréquence comprennent :
    - des moyens à limiteur (88) sensibles au signal de fréquence de battement; et
    - des moyens à circuit discriminateur (88) sensibles aux moyens à limiteur.

13. Système selon la revendication 2 et l'une quelconque des revendications 3 à 12 qui y sont annexées, caractérisé en ce qu'il comprend en outre des moyens à intégrateur (92) sensibles, par commutation, aux moyens de différence (94) et aux moyens de discrimination de fréquence (88), et ayant des moyens de sortie couplés par commutation aux moyens de commande de l'oscillateur émetteur (42,43).

14. Système selon l'une quelconque des revendications précédentes, caractérisé en ce qu'il inclut des moyens pour fournir les signaux de distance de cible en tant que signal de réglage automatique de gain aux moyens récepteurs.

15. Système selon l'une quelconque des revendications précédentes, caractérisé en ce que :
    - le système détecteur de cible comprend un démodulateur d'angle azimutal (67) sensible au signal de gamme de distance de la cible pour fournir des signaux d'erreur de l'angle azimutal ($K_{\epsilon_a}$), et un démodulateur d'angle d'élévation (68) sensible au signal de gamme de distance de la cible pour fournir des signaux d'erreur de l'angle d'élévation ($K_{\epsilon_e}$); et
    - les moyens de commande d'antenne comprennent des servomoteurs d'élévation et d'azimut (60,61) couplés à l'antenne et sensibles aux démodulateurs d'élévation et d'azimut, respectivement.

16. Système selon la revendication 2 et l'une quelconque des revendications 3 à 15 qui y sont annexées, caractérisé en ce que les moyens de commande de l'oscillateur émetteur comprennent un oscillateur commandé par tension (43), sensible par commutation aux moyens de différence (94) et aux moyens à générateur de recherche de distance (97), et des moyens de linéarisation de signal (42) ayant une entrée couplée aux moyens à oscillateur commandé par tension et une sortie couplée aux moyens à oscillateur émetteur (41).

PRIOR ART

# FIG.1.

PRIOR ART

# FIG.2.

FIG.3.

EP 0 276 530 B1

FIG. 4.

FIG.5.

# FIG.6.

102
223
230
150
231
234
7
232
234
7
233
Rₐ
235
210
rₐ
239
236
ψ
237
238
ψₘ

# FIG.7.

102
232
231
246
245
223
230
234
Rₑ
150
249
β
rₑ
247
248
233
βₘ

# FIG.8.

232
102
231
244
234
247

# FIG.9.

251
252
244
250
253
254

FIG.10.

| $f_1$ | $f_2$ | $f_a$ | $f_b$ |
|-------|-------|-------|-------|
| O | O | U | D |
| 1 | O | R | L |
| O | 1 | D | U |
| 1 | 1 | L | R |

## FIG.11.

FIG.12.

FROM LEFT WAVEGUIDE FEED 290

MIXER ~300

I.F. AMP. ~304

310 TO TERMINAL 261

294~

FROM UP WAVEGUIDE FEED 291

MIXER ~301

I.F. AMP. ~305

311 TO TERMINAL 262

295~

298 FROM OSCILLATOR 41

FROM RIGHT WAVEGUIDE FEED 292

MIXER ~302

I.F. AMP. ~306

312 TO TERMINAL 263

296~

FROM DOWN WAVEGUIDE FEED 293

MIXER ~303

I.F. AMP. ~307

313 TO TERMINAL 264

~297

FIG.13.

EP 0 276 530 B1